# EUROPEAN PATENT APPLICATION

(11) **EP 4 561 212 A1**
(43) Date of publication of application: **28.05.2025**
(21) Application number: 22951510.1
(22) Date of filing: 20.07.2022
(51) Int. Cl.: H04W 72/00, H04W 72/04

(54) **PROCESSING METHOD AND APPARATUS FOR INITIAL BWP, AND COMMUNICATION DEVICE AND STORAGE MEDIUM**

(71) Applicant: Beijing Xiaomi Mobile Software Co., Ltd., Beijing 100085 (CN)
(72) Inventor: LI, Yanhua, Beijing 100085 (CN)
(74) Representative: Dehns Germany Partnerschaft mbB
(86) International application number: PCT/CN2022/106866
(87) International publication number: WO 2024/016233

(57) **Abstract**

Provided in the embodiments of the present disclosure are a processing method and apparatus for an initial BWP, and a communication device and a storage medium. The processing method for an initial BWP is executed by a network device, and comprises: determining configuration information of a first-type UE, wherein the configuration information is used for indicating the configuration of at least one type of initial BWP for the first-type UE.

## Description

### TECHNICAL FIELD

The present disclosure relates to, but is not limited to, the wireless communication technical field, and in particular to an initial BWP processing method and apparatus, a communication device, and a storage medium.

### BACKGROUND

In related art, a new type of User Equipment (UE) is introduced. The new type of UE is a Reduced Capability (RedCap) UE or a 5G New Radio Light (5G NR-lite) UE. The new type of UE is similar to an IoT device and usually meets at least one of the following requirements: (1) low cost and low complexity; (2) a certain degree of coverage enhancement; (3) power saving; (4) a part of UEs support a single RX antenna structure or a part of UEs support a dual RX antenna structure; (5) in R18, after the introduction of the new type of UE, the applicable bandwidth of the new type of UE is further reduced.

When the new type of UE is introduced, its main application scenario includes a large number of sensors, etc. However, due to the large number of new types of UE, the new types of UE cannot determine a suitable initial BWP to monitor message(s), etc., resulting in poor wireless communication quality.

### SUMMARY

Embodiments of the present disclosure provide an initial BWP processing method and apparatus, a communication device, and a storage medium.

According to a first aspect of the present disclosure, there is provided an initial BWP processing method. The method is performed by a network device. The method includes:
determining configuration information for a first type of UE, wherein the configuration information is used to indicate that at least one type of initial Bandwidth Part (BWP) is configured for the first type of UE.

In some embodiments, the method includes: sending the configuration information.

In some embodiments, sending the configuration information includes: sending a second System Information Block (SIB 1) carrying the configuration information.

In some embodiments, the configuration information is used to at least indicate that a first type of initial BWP is configured for the first type of UE, wherein the first type of initial BWP is used for monitoring paging information.

In some embodiments, the paging information is at least one of:
Paging Early Indication (PEI); and
Paging Downlink Control Information (Paging DCI).

In some embodiments, the first type of initial BWP does not include at least one of: a first Control Resource Set (Coreset#0), a second Control Resource Set (Coreset#0-bis), and a Cell Defining Synchronization Signal Block (CD-SSB); and/or
the first type of initial BWP does not include at least one of the Coreset#0 and the Coreset#0-bis, and the first type of initial BWP includes a Non-Cell Defining Synchronization Signal Block (NCD-SSB); and/or
the first type of initial BWP does not include: a search space for Random Access (RA) and/or a search space for system information; and/or
the first type of initial BWP comprises a search space for paging.

In some embodiments, the configuration information is used to at least indicate that a second type of initial BWP is configured for the first type of UE, wherein the second type of initial BWP is used for monitoring a response message in a random access procedure.

In some embodiments, the second type of initial BWP does not include at least one of: a Coreset#0, a Coreset#0-bis, an NCD-SSB, and a CD-SSB; and/or
the second type of initial BWP does not include: a search space for paging and/or a search space for system information; and/or
the second type of initial BWP includes a search space for RA.

In some embodiments, the configuration information is used to at least indicate that a third type of initial BWP is configured for the first type of UE, wherein the third type of initial BWP is used for monitoring paging information and a response message in a random access procedure.

In some embodiments, the third type of initial BWP does not include at least one of: Coreset#0, Coreset#0-bis, and CD-SSB; and/or
the third type of initial BWP does not include at least one of Coreset#0 and Coreset#0-bis, and the third type of initial BWP includes a Non-Cell Defining Synchronization Signal Block (NCD-SSB); and/or
the third type of initial BWP does not include a search space for system information.

In some embodiments, the configuration information is used to at least indicate that a fourth type of initial BWP is configured for the first type of UE, wherein the fourth type of initial BWP is at least used for monitoring system information.

In some embodiments, the fourth type of initial BWP is further used for monitoring paging and/or a response message in a random access procedure.

In some embodiments, the fourth type of initial BWP includes at least one of: a first Control Resource Set (Coreset#0), a second Control Resource Set (Coreset#0s), and a CD-SSB;

In some embodiments, the fourth type of initial BWP at least includes a search space for system information, and the fourth type of initial BWP further includes a search space for paging and/or a search space for RA.

In some embodiments, the configuration information is further used to indicate that a first type of initial BWP is configured for the first type of UE;
the first type of initial BWP is used for monitoring paging information, and the fourth type of initial BWP is used for monitoring a response message in a random access procedure and/or system information; or
the first type of initial BWP and/or the third type of initial BWP is used for monitoring paging information, and the fourth type of initial BWP is used for monitoring a response message in a random access procedure and/or system information.

In some embodiments, the configuration information is further used to indicate that a second type of initial BWP is configured for the first type of UE;
the second type of initial BWP is used for monitoring a response message in a random access procedure, and the fourth type of initial BWP is used for monitoring paging information and/or system information.

In some embodiments, the configuration information is further used to indicate that a third type of initial BWP is configured for the first type of UE;
the third type of initial BWP is used for monitoring paging and/or a response message in a random access procedure, and the fourth type of initial BWP is used for monitoring system information.

In some embodiments, the fourth type of initial BWP includes a search space for system information.

In some embodiments, the configuration information is further used to indicate that a first type of initial BWP is configured for the first type of UE;
the first type of initial BWP is used for monitoring paging information, and the fourth type of initial BWP is used for monitoring system information.

In some embodiments, the configuration information is further used to indicate that a second type of initial BWP is configured for the first type of UE;
the second type of initial BWP is used for monitoring a response message in a random access procedure, and the fourth type of initial BWP is used for monitoring system information.

In some embodiments, the configuration information is further used to indicate that a third type of initial BWP is configured for the first type of UE;
the third type of initial BWP is used for monitoring a response message in a random access procedure and/or paging information, and the fourth type of initial BWP is used for monitoring system information.

In some embodiments, the method includes: determining an NCD-SSB configuration of the initial BWP according to an agreement in a protocol.

In some embodiments, determining the NCD-SSB configuration of the initial BWP according to the agreement in the protocol includes one of:
determining that the initial BWP does not include CD-SSB and includes an NCD-SSB according to the agreement in the protocol;
determining that the initial BWP does not include a CD-SSB but there is a Tracking Reference Signal (TRS) configuration and determining that the initial BWP does not include the NCD-SSB according to the agreement in the protocol;
determining that one of the initial BWP includes at most one SSB according to the agreement in the protocol, wherein the SSB includes the CD-SSB or the NCD-SSB;
determining that the initial BWP includes the NCD-SSB according to the agreement in the protocol.

In some embodiments, the configuration information is used to indicate the first type of initial BWP and/or the second type of initial BWP, the first type of initial BWP includes an NCD-SSB and/or the second type of initial BWP includes the NCD-SSB, wherein the NCD-SSB is used for synchronization for the first type of UE before paging or measurement in a random access procedure.

In some embodiments, a relevant characteristic of the NCD-SSB includes at least one of:
a Quasi Co-Location (QCL) relationship being the same as that of a CD-SSB;
a transmit power of the NCD-SSB being the same as or different from a transmit power of the CD-SSB;
a period of the NCD-SSB being greater than or equal to a period of the CD-SSB;
the NCD-SSB being not configured on a synchronization raster;
subcarrier spacing of the NCD is the same as or different from subcarrier spacing of the CD-SSB.

In some embodiments, the NCD-SSB is further used for measurement of a UE in an RRC non-connected state.

According to a second aspect of the present disclosure, there is provided an initial BWP processing method. The method is performed by a first type of UE. The method includes:
receiving configuration information, wherein the configuration information is used to indicate that at least one type of initial BWP is configured for the first type of UE.

In some embodiments, receiving the configuration information includes: receiving a second System Information Block (SIB 1) carrying the configuration information.

In some embodiments, the configuration information is used to indicate that at least one of following types of initial BWP is configured for the first type of UE:
a first type of initial BWP used for monitoring paging;
a second type of initial BWP used for monitoring a response message in a random access procedure;
a third type of initial BWP used for monitoring paging and/or a response message in a random access procedure;
a fourth type of initial BWP used for monitoring system information.

In some embodiments, the method includes: based on the configuration information, determining to use the first type of initial BWP to monitor paging information.

In some embodiments, determining to use the first type of initial BWP to monitor paging information includes one of:
based on an index by means of modulo based on at least one first type of initial BWP based on a UE-ID, determining a first type of initial BWP corresponding to a predetermined index to monitor the paging information;
when connection is released, performing monitoring of paging information on the corresponding first type of initial BWP;
based on a coverage enhancement level of at least one of the first type of initial BWP, determining a first type of initial BWP corresponding to a predetermined enhanced coverage level to monitor the paging information.

According to a third aspect of the present disclosure, there is provided an initial BWP processing apparatus, including:
a first processing module configured to determine configuration information for a first type of UE, wherein the configuration information is used to indicate that at least one type of initial BWP is configured for the first type of UE.

In some embodiments, the apparatus includes: a sending module configured to send the configuration information.

In some embodiments, the sending module is configured to: send a second System Information Block carrying the configuration information.

In some embodiments, the configuration information is used to at least indicate that a first type of initial BWP is configured for the first type of UE, wherein the first type of initial BWP is used for monitoring paging information.

In some embodiments, the paging information is at least one of: PEI; and Paging DCI.

In some embodiments, the first type of initial BWP does not include at least one of: a first Control Resource Set (Coreset#0), a second Control Resource Set (Coreset#0-bis), and a CD-SSB; and/or
the first type of initial BWP does not include at least one of the Coreset#0 and the Coreset#0-bis, and the first type of initial BWP includes an NCD-SSB; and/or
the first type of initial BWP does not include: a search space for RA and/or a search space for system information; and/or
the first type of initial BWP includes a search space for paging.

In some embodiments, the configuration information is used to at least indicate that a second type of initial BWP is configured for the first type of UE, wherein the second type of initial BWP is used for monitoring a response message in a random access procedure.

In some embodiments, the second type of initial BWP does not include at least one of: Coreset#0, Coreset#0-bis, an NCD-SSB, and a CD-SSB; and/or
the second type of initial BWP does not include: a search space for paging and/or a search space for system information; and/or
the second type of initial BWP includes a search space for RA.

In some embodiments, the configuration information is used to at least indicate that a third type of initial BWP is configured for the first type of UE, wherein the third type of initial BWP is used for monitoring paging information and a response message in a random access procedure.

In some embodiments, the third type of initial BWP does not include at least one of: a Coreset#0, a Coreset#0-bis, and a CD-SSB; and/or
the third type of initial BWP does not include at least one of the Coreset#0 and the Coreset#0-bis, and the third type of initial BWP includes an NCD-SSB; and/or
the third type of initial BWP does not include a search space for system information.

In some embodiments, the configuration information is used to at least indicate that a fourth type of initial BWP is configured for the first type of UE, wherein the fourth type of initial BWP is at least used for monitoring system information.

In some embodiments, the fourth type of initial BWP is further used for monitoring paging and/or a response message in a random access procedure.

In some embodiments, the fourth type of initial BWP includes at least one of: Coreset#0, Coreset#0s, and a CD-SSB;

In some embodiments, the fourth type of initial BWP at least includes a search space for system information, and the fourth type of initial BWP further includes a search space for paging and/or a search space for RA.

In some embodiments, the configuration information is further used to indicate that a first type of initial BWP is configured for the first type of UE;
the first type of initial BWP is used for monitoring paging information, and the fourth type of initial BWP is used for monitoring a response message in a random access procedure and/or system information; or
the first type of initial BWP and/or the third type of initial BWP is used for monitoring paging information, and the fourth type of initial BWP is used for monitoring a response message in a random access procedure and/or system information.

In some embodiments, the configuration information is further used to indicate that a second type of initial BWP is configured for the first type of UE;
the second type of initial BWP is used for monitoring a response message in a random access procedure, and the fourth type of initial BWP is used for monitoring paging information and/or system information.

In some embodiments, the configuration information is further used to indicate that a third type of initial BWP is configured for the first type of UE;
the third type of initial BWP is used for monitoring paging and/or a response message in a random access procedure, and the fourth type of initial BWP is used for monitoring system information.

In some embodiments, the fourth type of initial BWP includes a search space for system information.

In some embodiments, the configuration information is further used to indicate that a first type of initial BWP is configured for the first type of UE;
the first type of initial BWP is used for monitoring paging information, and the fourth type of initial BWP is used for monitoring system information.

In some embodiments, the configuration information is further used to indicate that a second type of initial BWP is configured for the first type of UE;
the second type of initial BWP is used for monitoring a response message in a random access procedure, and the fourth type of initial BWP is used for monitoring system information.

In some embodiments, the configuration information is further used to indicate that a third type of initial BWP is configured for the first type of UE;
the third type of initial BWP is used for monitoring a response message in a random access procedure and/or paging information, and the fourth type of initial BWP is used for monitoring system information.

In some embodiments, the first processing module is configured to: determine an NCD-SSB configuration of the initial BWP according to an agreement in a protocol.

In some embodiments, the first processing module is configured to perform one of:
determining that the initial BWP does not include CD-SSB and includes an NCD-SSB according to the agreement in the protocol;
determining that the initial BWP does not include a CD-SSB but there is a TRS configuration and determining that the initial BWP does not include the NCD-SSB according to the agreement in the protocol;
determining that one of the initial BWP includes at most one SSB according to the agreement in the protocol, wherein the SSB includes the CD-SSB or the NCD-SSB;
determining that the initial BWP includes the NCD-SSB according to the agreement in the protocol.

In some embodiments, the configuration information is used to indicate the first type of initial BWP and/or the second type of initial BWP, the first type of initial BWP includes an NCD-SSB and/or the second type of initial BWP includes the NCD-SSB, wherein the NCD-SSB is used for synchronization for the first type of UE before paging or measurement in a random access procedure.

In some embodiments, a relevant characteristic of the NCD-SSB includes at least one of:
a Quasi Co-Location (QCL) relationship being the same as that of a CD-SSB;
a transmit power of the NCD-SSB being the same as or different from a transmit power of the CD-SSB;
a period of the NCD-SSB being greater than or equal to a period of the CD-SSB;
the NCD-SSB being not configured on a synchronization raster;
subcarrier spacing of the NCD is the same as or different from subcarrier spacing of the CD-SSB.

In some embodiments, the NCD-SSB is further used for measurement of the UE in an RRC non-connected state.

According to a fourth aspect of the present disclosure, there is provided an initial BWP processing method. The method is performed by a first type of UE, including:
a receiving module configured to receive configuration information, wherein the configuration information is used to indicate that at least one type of initial BWP is configured for the first type of UE.

In some embodiments, the receiving module is configured to: receive a second System Information Block (SIB 1) carrying the configuration information.

In some embodiments, the configuration information is used to indicate that at least one of following types of initial BWP is configured for the first type of UE:
a first type of initial BWP used for monitoring paging;
a second type of initial BWP used for monitoring a response message in a random access procedure;
a third type of initial BWP used for monitoring paging and/or a response message in a random access procedure;
a fourth type of initial BWP used for monitoring system information.

In some embodiments, the apparatus includes: a second processing module configured to, based on the configuration information, determine to use the first type of initial BWP to monitor paging information.

In some embodiments, the second processing module is configured to perform one of:
based on an index by means of modulo based on at least one first type of initial BWP based on a UE-ID, determining a first type of initial BWP corresponding to a predetermined index to monitor the paging information;
when connection is released, performing monitoring of paging information on the corresponding first type of initial BWP;
based on a coverage enhancement level of at least one of the first type of initial BWP, determining a first type of initial BWP corresponding to a predetermined enhanced coverage level to monitor the paging information.

According to a fifth aspect of the present disclosure, there is provided a communication device. The communication device includes:
a processor;
a memory storing instructions executable by the processor;
the processor is configured to, when running the executable instructions, implement the initial BWP processing method according to any one of embodiments of the present disclosure.

According to a sixth aspect of the present disclosure, there is provided a computer storage medium. The computer storage medium stores a computer executable program, and when the executable program is executed by a processor, the initial BWP processing method according to any one of embodiments of the present disclosure is implemented.

The technical solutions provided by the embodiments of the present disclosure can have the following beneficial effects:
In the embodiments of the present disclosure, the configuration information for the first type of UE can be determined by the network device, wherein the configuration information is used to indicate that at least one type of initial BWP is configured for the first type of UE. In this way, the network device can configure at least one type of initial BWP for the first type of UE, and different types of initial BWPs have different monitoring purposes, so that the UE can monitor at least one type of information based on the configured at least one type of initial BWP and the UE can use an appropriate type of initial BWP to monitor corresponding information, thereby improving the quality of wireless communication.

It should be understood that the foregoing general description and the following detailed description are illustrative and explanatory only and are not restrictive of the embodiments of the present disclosure.

### BRIEF DESCRIPTION OF THE DRAWINGS

FIG. 1 is a schematic structural diagram of a wireless communication system according to an example embodiment.
FIG. 2 is a schematic diagram of a BWP according to an example embodiment.
FIG. 3 is a schematic diagram of an initial BWP processing method according to an example embodiment.
FIG. 4 is a schematic diagram of an initial BWP processing method according to an example embodiment.
FIG. 5 is a schematic diagram of an initial BWP processing method according to an example embodiment.
FIG. 6 is a schematic diagram of an initial BWP processing method according to an example embodiment.
FIG. 7 is a schematic diagram of an initial BWP processing method according to an example embodiment.
FIG. 8 is a block diagram of an initial BWP processing apparatus according to an example embodiment.
FIG. 9 is a block diagram showing an initial BWP processing apparatus according to an example embodiment.
FIG. 10 is a block diagram of a UE according to an example embodiment.
FIG. 11 is a block diagram of a base station according to an example embodiment.

### DETAILED DESCRIPTION

Example embodiments will be described in detail herein, examples of which are illustrated in the accompanying drawings. When the following description refers to the drawings, the same numbers in different drawings refer to the same or similar elements unless otherwise indicated. The implementations described in the following example embodiments do not represent all implementations consistent with embodiments of the invention. Rather, they are merely examples of apparatuses and methods consistent with some aspects of embodiments of the present disclosure as detailed in the appended claims.

The terms used in embodiments of the present disclosure are for the purpose of describing example embodiments only and are not intended to limit the embodiments of the present disclosure. As used in the embodiments of the present disclosure and the appended claims, the singular forms "a/an" and "the" are intended to include a plural form as well, unless the context clearly dictates otherwise. It will also be understood that the term "and/or" as used herein refers to and includes any and all possible combinations of one or more of associated listed items.

It should be understood that although the terms first, second, third, etc. may be used to describe various information in the embodiments of the present disclosure, the information should not be limited to these terms. These terms are only used to distinguish information of the same type from each other. For example, without departing from the scope of the embodiments of the present disclosure, first information may also be called second information, and similarly, second information may also be called first information. Depending on the context, the word "if" as used herein may be interpreted as "when" or "in a case where..." or "in response to determining...".

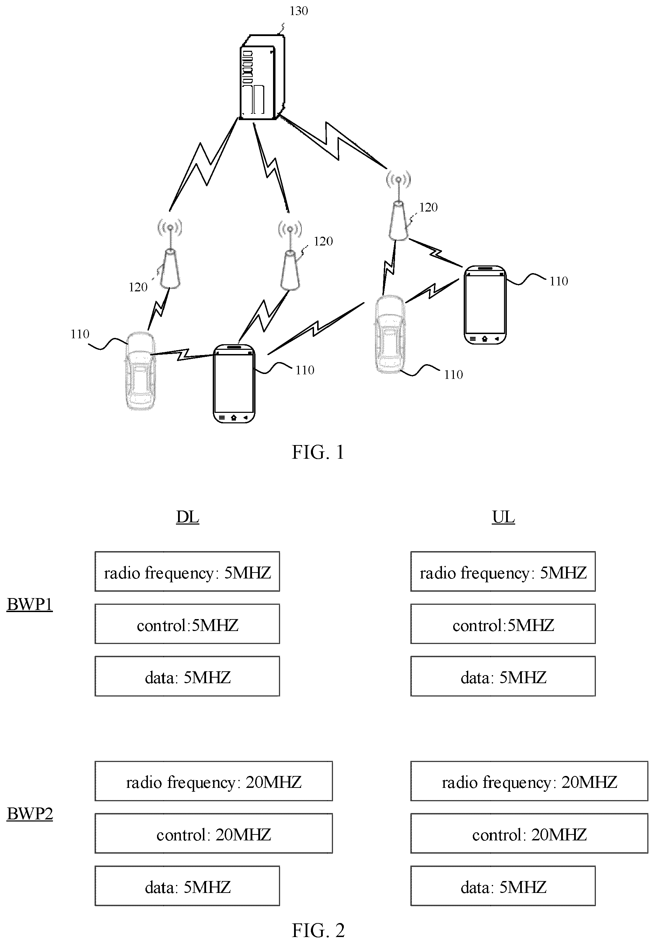

FIG. 1 shows a schematic structural diagram of a wireless communication system provided by an embodiment of the present disclosure. As shown in FIG. 1, the wireless communication system is a communication system based on cellular mobile communication technologies. The wireless communication system may include multiple pieces of user equipment 110 and multiple base stations 120.

User equipment 110 may be a device that provides voice and/or data connectivity to a user. The user equipment 110 may communicate with one or more core networks via a Radio Access Network (RAN). The user equipment 110 may be an Internet of Things user equipment, such as a sensor device, a mobile phone (or referred to as a "cellular" phone), and a computer with Internet of Things user equipment, for example, it can be a fixed, portable, pocket-sized, handheld, computer-built-in or vehicle-mounted device. For example, the user equipment 110 may be a station (STA), a subscriber unit, a subscriber station, a mobile station, a mobile, a remote station, an access point, remote user equipment (remote terminal), access user equipment (access terminal), a user terminal, a user agent, a user device, or user equipment. Alternatively, the user equipment 110 may be equipment of an unmanned aerial vehicle. Alternatively, the user equipment 110 may be a vehicle-mounted device, for example, it may be an on-board computer with a wireless communication function, or wireless user equipment connected to an external on-board computer. Alternatively, the user equipment 110 may be a roadside device, for example, it may be a streetlight, a signal light or other roadside device with a wireless communication function.

A base station 120 may be a network side device in a wireless communication system. The wireless communication system may be the 4th generation mobile communication (4G) system, also known as the Long Term Evolution (LTE) system; or, the wireless communication system may be a 5G system, also called new radio system or 5G NR system. Alternatively, the wireless communication system may be a next-generation system of the 5G system. The access network in the 5G system may be called New Generation-Radio Access Network (NG-RAN).

The base station 120 may be an evolved base station (eNB) used in the 4G system. Alternatively, the base station 120 may be a base station (gNB) using a centralized distributed architecture in the 5G system. When the base station 120 adopts a centralized distributed architecture, it usually includes a central unit (CU) and at least two distributed units (DU). The central unit is provided with a protocol stack including a Packet Data Convergence Protocol (PDCP) layer, a Radio Link Control protocol (RLC) layer, and a Medium Access Control (MAC) layer; a distributed unit is provided with a physical (PHY) layer protocol stack. The embodiments of the present disclosure do not limit the specific implementation of the base station 120.

A wireless connection may be established between a base station 120 and user equipment 110 through a radio air interface. In different implementations, the radio air interface is a radio air interface based on the fourth generation mobile communication network technology (4G) standard; or, the radio air interface is a radio air interface based on the fifth generation mobile communication network technology (5G) standard, for example, the radio air interface is a new air interface; alternatively, the radio air interface may be a radio air interface based on the next generation mobile communication network technology standard of 5G.

In some embodiments, an End to End (E2E) connection may be established between user equipment 110, for example, vehicle to vehicle (V2V) communication, vehicle to Infrastructure (V2I) communication and vehicle to pedestrian (V2P) communication in vehicle to everything (V2X) and so on.

Here, the above-mentioned user equipment may be considered as a terminal device in the following embodiments.

In some embodiments, the above-mentioned wireless communication system may also include a network management device 130.

Multiple base stations 120 are connected to the network management device 130 respectively. The network management device 130 may be a core network device in a wireless communication system. For example, the network management device 130 may be a Mobility Management Entity (MME) in an Evolved Packet Core (EPC). Alternatively, the network management device may be other core network devices, such as Serving GateWay (SGW), Public Data Network GateWay (PGW), Policy and Charging Rules Function (PCRF) or Home Subscriber Server (HSS), etc. The embodiments of the present disclosure do not limit the implementation form of the network management device 130.

In order to facilitate understanding of those skilled in the art, embodiments of the present disclosure list multiple implementations to clearly illustrate the technical solutions of the embodiments of the present disclosure. Of course, those skilled in the art can understand that the multiple implementations provided by the embodiments of the present disclosure can be performed individually, or can be performed in combination with methods of other implementations of the embodiments of the present disclosure, or can be performed individually or in combination with some methods in other related technologies, and embodiments of the present disclosure do not limit this.

In order to better understand technical solutions described in any embodiment of the present disclosure, some of related technologies are described first.

In an embodiment, an applicable bandwidth for a RedCap UE or NR-lite UE is further reduced, i.e., further enhancement. For example, as shown in FIG. 2, the applicable bandwidth is reduced from 20 MHz to 5 MHz. For example, for Bandwidth Part (BWP) 1, a BWP corresponding to Radio Frequency (RF), control and data (Date) in downlink (DL) transmission and/or uplink (UL) transmission can be 5 MHZ. For another example, as shown in BW3, the BWP corresponding to Radio Frequency (RF) and control in the downlink (DL) transmission and/or uplink (UL) transmission can be 20 MHZ, and the BWP corresponding to the data (Date) in the downlink (DL) transmission and/or uplink (UL) transmission can be 5 MHZ.

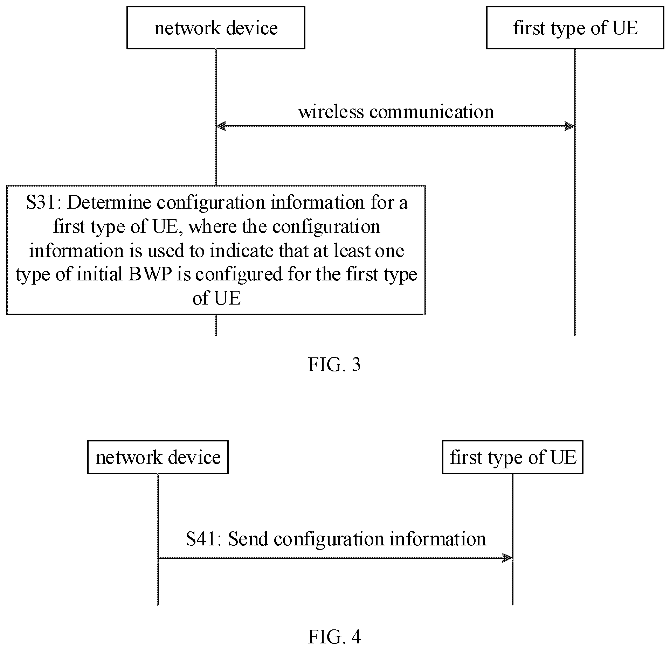

As shown in FIG. 3, an embodiment of the present disclosure provides a BWP processing method. The method is performed by a network device. The method includes:
In step S31, configuration information of a first type of UE is determined. The configuration information is used to indicate that at least one type of initial BWP is configured for the first type of UE.

In an embodiment, the first type of UE may be, but is not limited to, various kinds of terminals with a reduced capability. For example, the first type of UE may be a RedCap UE or a 5G NR-lite UE, etc.

In another embodiment, the first type of UE may be various kinds of mobile terminals or fixed terminals. For example, the UE may be, but is not limited to, a mobile phone, a computer, a server, a wearable device, a game control platform, a multimedia device, or various kinds of sensors.

In an embodiment, the network device includes an access network device and/or a core network device. Here, the access network device may be, but is not limited to, a base station; the core network device may be, but is not limited to, various kinds of network functions or entities that implement network functions. Here, the base station may be, but is not limited to, at least one of the following: a 3G base station, a 4G base station, a 5G base station, and other evolved base station(s).

Here, different types of initial BWPs are used for monitoring different pieces of information.

Here, an initial BWP is a downlink initial BWP.

In some embodiments, the configuration information is used to indicate that at least one of the following types of initial BWP is configured for the first type of UE:
a first type of initial BWP used for monitoring paging;
a second type of initial BWP used for monitoring a response message in a random access procedure;
a third type of initial BWP used for monitoring paging and a response message in a random access procedure;
a fourth type of initial BWP used for monitoring system information.

Here, the response message in the random access procedure may be but is not limited to the following message: msg2, msgB and msg4.

In an embodiment, the third type of initial BWP is used for monitoring paging and/or the response message in the random access procedure.

In an embodiment, monitoring the response message in the random access procedure may also be monitoring an RAR.

In some embodiments, the configuration information is used to indicate that at least one initial BWP is configured for the first type of UE. Here, the at least one initial BWP may be an initial BWP of one type; or, the multiple initial BWPs may be initial BWPs of multiple types. In some embodiments of the present disclosure, the multiple is 2 or more.

In an embodiment of the present disclosure, the configuration information for the first type of UE can be determined by the network device. The configuration information is used to indicate that at least one type of initial BWP is configured for the first type of UE. In this way, the network device can configure at least one type of initial BWP for the first type of UE, and the different types of initial BWPs have different monitoring purposes, so that the UE can monitor at least one type of information based on the configured at least one type of initial BWP and the UE can use an appropriate type of initial BWP to monitor corresponding information, thereby improving the quality of wireless communication.

Furthermore, in an embodiment of the present disclosure, if the network device configures multiple initial BWPs for the first type of UE, this embodiment can also solve the problem of insufficient paging capacity when a relatively large number of first type of UEs are paged, so that the first type of UEs can be paged with relatively sufficient paging capacity.

It should be noted that those skilled in the art can understand that a method provided in an embodiment of the present disclosure can be performed alone or together with some methods in embodiments of the present disclosure or some methods in related art.

As shown in FIG. 4, an embodiment of the present disclosure provides a BWP processing method. The method is performed by a network device. The method includes:
In step S41, configuration information is sent.

In some embodiments of the present disclosure, the configuration information may be the configuration information in step S31.

In an embodiment, step S41 may be as follows: the network device sends the configuration information to the first type of UE. Here, if the network device is a base station, the base station may send the configuration information to the first type of UE; or, if the network device is a core network device, the core network device sends the configuration information to the base station, and the base station forwards the configuration information to the first type of UE.

Thus, in the embodiment of the present disclosure, the network device sends the configuration information to the first type of UE, so that at least one type of initial BWP can be configured for the first type of UE.

In some embodiments, step S41 includes: sending a second system information block carrying the configuration information. For example, the second system information block may be named SIB1-bis. The second system information block is SIB1 sent by a specific type of terminal, and its scheduling resource location or content may be different from a first system information block (SIB1) originally used for legacy UE users.

An embodiment of the present disclosure provides a BWP processing method. The method is performed by a network device and includes: sending SIB1-bis carrying the configuration information.

Here, the SIB1-bis may be a newly defined system information block. The SIB1-bis may be scheduled in Coreset#0 or the second Coreset#0. The second Coreset#0 is a Coreset#0 sent for a specific type of terminal, and its scheduling resource location or content may be different from the Coreset#0 which is originally used for legacy users, for example, it is Coreset#0-bis. The Coreset#0-bis is used for scheduling of the second system information block, such as SIB1-bis.

Here, the second system information block (SIB 1-bis) may be any remaining minimum system block.

Of course, in other embodiments, the SIB1-bis may also be replaced by any other system information block. As an example, the network device sends the system information block carrying the configuration information. The system information block may be, but is not limited to, at least one of: SIB1, SIB2, SIB11, or SIB12, and so on.

An embodiment of the present disclosure provides a BWP processing method. The method is performed by a network device and includes: sending system information carrying the configuration information.

Thus, in the embodiment of the present disclosure, the configuration information can be sent via system information, thereby reducing signaling overhead.

It should be noted that those skilled in the art can understand that a method provided in an embodiment of the present disclosure can be performed alone or together with some methods in embodiments of the present disclosure or some methods in related art.

In some embodiments, the configuration information is used to at least indicate that the first type of initial BWP is configured for the first type of UE; where the first type of initial BWP is used for monitoring paging information.

In some embodiments of the present disclosure, the configuration information may be the configuration information in step S31.

In some embodiments, the first type of initial BWP is used for monitoring at least one of the following paging information:
Paging Early Indication (PEI); and
Paging Downlink Control Information (Paging DCI).

Here, the first type of initial BWP is used for the first type of UE to monitor the PEI and/or the paging DCI.

As an example, the network device determines the configuration information for the first type of UE and sends the configuration information to the first type of UE. The configuration information is used to indicate that at least one first type of initial BWP is configured for the first type of UE. The first type of initial BWP is used for the first type of UE to monitor the PEI and/or paging DCI.

In some embodiments, the first type of initial BWP does not include at least one of: a first Control Resource Set (Coreset#0), a second Control Resource Set (Coreset#0-bis), and a Cell Defining Synchronization Signal Block (CD-SSB); and/or, the first type of initial BWP does not include at least one of: a search space for RA and/or a search space for system information; and/or, the first type of initial BWP includes a search space for paging.

In some embodiments, the first type of initial BWP does not include at least one of: the first Control Resource Set (Coreset#0), the second Control Resource Set (Coreset#0-bis); but the first type of initial BWP includes a Non-Cell Defining Synchronization Signal Block (None Cell Defining Synchronization Signal Block, NCD-SSB).

Here, the first type of initial BWP and the subsequently described second type of initial BWP, the third type of initial BWP and the fourth type of initial BWP may all include a Non-cell Defining Synchronization Signal Block (NCD-SSB). Since these initial BWPs include the NCD-SSB in this case, these initial BWPs may not include the Coreset#0 and/or the Coreset#0-bis.

Here, the first type of initial BWP and the subsequently described second type of initial BWP, the third type of initial BWP and the fourth type of initial BWP may also include the Coreset#0 and/or the Coreset#0-bis. In this case, these initial BWPs may include the CD-SSB but do not include the NCD-SSB.

Here, the Coreset#0-bis may be a newly defined control resource set.

The search space involved in the embodiments of the present disclosure may be considered as a time domain resource.

In an embodiment, the search space for paging includes: a search space for the PEI and/or a search space for the paging DCI.

As an example, the network device determines the configuration information for the first type of UE and sends the configuration information to the first type of UE. The configuration information is used to indicate that at least one first type of initial BWP is configured for the first type of UE. The first type of initial BWP does not include at least one of: the Coreset#0, the Coreset#0-bis and the CD-SSB, and the first type of initial BWP includes a search space for paging but does not include a search space for RA and/or a search space for system information.

In the embodiment of the present disclosure, if the first type of initial BWP includes the configuration of the search space for paging, when the first type of UE performs monitoring based on the configured first type of initial BWP, the first type of UE can monitor the paging information in the search space for paging, thereby improving the efficiency of monitoring the paging information.

If the first type of initial BWP does not include the configuration of the search space for RA and/or the search space for system information, the response message in the random access procedure and/or system information may not needed to be monitored in the first type of initial BWP, while signaling overhead required for sending the configuration information (the configuration information for indicating the first type of initial BWP) can be reduced.

If the first type of initial BWP does not include the configuration of at least one of the Coreset#0, the Coreset#0-bis and the CD-SSB, the signaling overhead required for sending the configuration information can be further reduced.

In some embodiments, the first type of initial BWP does not include at least one of: the first Control Resource Set (Coreset#0), the second Control Resource Set (Coreset#0-bis); but first type of initial BWP includes a Non-Cell Defining Synchronization Signal Block (None Cell Defining Synchronization Signal Block, NCD-SSB). The advantage is that it is not necessary for all the first type of initial BWP(s) to cover the first Control Resource Set (Coreset#0) and the second Control Resource Set (Coreset#0-bis) which would cause congestion in the allocated resources. In this way, it can be more dispersed within the frequency range.

It should be noted that those skilled in the art can understand that a method provided in an embodiment of the present disclosure can be performed alone or together with some methods in the embodiments of the present disclosure or some methods in related art.

In some embodiments, the configuration information is used to at least indicate that a second type of initial BWP is configured for the first type of UE; the second type of initial BWP is used for monitoring a response message in a random access procedure.

Here, the second type of initial BWP is used for the first type of UE to monitor a response message in a random access procedure. Here, the second type of initial BWP can also be used for the first type of UE to monitor a random access (RA).

In some embodiments, the second type of initial BWP does not include at least one of: the Coreset#0, the Coreset#0-bis, and the SSB; and/or, the second type of initial BWP does not include at least one of: a search space for paging and/or a search space for system information; and/or, the second type of initial BWP includes a search space for RA. Here, the SSB may include the CD-SSB and/or the NCD SSB.

As an example, the network device determines the configuration information for the first type of UE and sends the configuration information to the first type of UE. The configuration information is used to indicate that at least one second type of initial BWP is configured for the first type of UE. The second type of initial BWP does not include at least one of: the Coreset#0, the Coreset#0-bis and the CD-SSB, and the second type of initial BWP does not include the search space for paging and/or system information but includes the search space for RA.

In an embodiment of the present disclosure, if the second type of initial BWP includes a configuration of the search space for RA, the first type of UE can monitor a response message in a random access procedure in the search space for RA on the configured second type of initial BWP, thereby improving the efficiency of monitoring the response message in the random access procedure.

If the second type of initial BWP does not include the search space for paging and/or system information, paging and/or system information may not needed to be monitored on the second type of initial BWP, while the signaling overhead required for sending the configuration information (the configuration information indicating the second type of initial BWP) can be reduced.

If the second type of initial BWP does not include the configuration of at least one of the Coreset#0, the Coreset#0-bis and the CD-SSB, the signaling overhead required for sending the configuration information can be further reduced.

It should be noted that those skilled in the art can understand that a method provided in an embodiment of the present disclosure can be performed alone or together with some methods in the embodiments of the present disclosure or some methods in related art.

In some embodiments, the configuration information is used to at least indicate that a third type of initial BWP is configured for the first type of UE. The third type of initial BWP is used for monitoring paging information and a response message in a random access procedure.

In some other embodiments, the third type of initial BWP is used for monitoring paging information and/or a response message in a random access procedure.

In some embodiments, the third type of initial BWP does not include at least one of: the Coreset#0, the Coreset#0-bis, and the CD-SSB; and/or, the third type of initial BWP does not include at least one of the Coreset#0 and the Coreset#0-bis, and the third type of initial BWP includes the NCD-SSB; and/or, the third type of initial BWP does not include a search space for system information.

Here, the Coreset#0 and the Coreset#0-bis can be considered as frequency domain resource sets.

In some embodiments, the third type of initial BWP includes a search space for paging and/or a search space for RA.

As an example, the network device determines the configuration information for the first type of UE and sends the configuration information to the first type of UE. The configuration information is used to indicate that at least one third type of initial BWP is configured for the first type of UE. The third type of initial BWP does not include the configuration of at least one of the Coreset#0, the Coreset#0-bis and the CD-SSB, and the third type of initial BWP does not include a search space for system information.

As an example, the network device determines the configuration information for the first type of UE and sends the configuration information to the first type of UE. The configuration information is used to indicate that at least one third type of initial BWP is configured for the first type of UE. The third type of initial BWP does not include the Coreset#0 and/or the Coreset#0-bis, and the third type of initial BWP includes the NCD-SSB, and the third type of initial BWP does not include a search space for system information.

In an embodiment of the present disclosure, if the third type of initial BWP does not include the configuration of the search space for system information, the system information may not needed to be monitored on the first type of initial BWP, while the signaling overhead required for sending the configuration information (configuration information indicating the third type of initial BWP) can be reduced.

If the first type of initial BWP does not include the configuration of at least one of the Coreset#0, the Coreset#0-bis and the CD-SSB, the signaling overhead required for sending the configuration information can be further reduced.

It should be noted that those skilled in the art can understand that a method provided in an embodiment of the present disclosure can be performed alone or together with some methods in the embodiments of the present disclosure or some methods in related art.

In some embodiments, the configuration information is used to at least indicate that a fourth type of initial BWP is configured for the first type of UE. The fourth type of initial BWP is at least used for monitoring system information.

In some embodiments, the fourth type of initial BWP is also used for monitoring paging information and/or a response message in a random access procedure.

In some embodiments, the fourth type of initial BWP includes at least one of: the first Control Resource Set (Coreset#0), the second Control Resource Set (Coreset#0-bis), and the CD-SSB; and/or, the fourth type of initial BWP includes at least one of: the Coreset#0, the Coreset#0-bis, and a search space. Here, the search space may be at least one of: a search space for system information, a search space for RA, and a search space for paging.

In some embodiments, the fourth type of initial BWP includes at least a search space for system information; and the fourth type of initial BWP further includes a search space for paging and/or a search space for RA.

In some embodiments, the configuration information is further used to indicate that the first type of initial BWP is configured for the first type of UE. The first type of initial BWP is used for monitoring paging information, and the fourth type of initial BWP is used for monitoring a response message in a random access procedure and/or system information; or, the first type of initial BWP and/or the third type of initial BWP are used for monitoring paging information, and the fourth type of initial BWP is used for monitoring a response message in a random access procedure and/or system information.

Here, the configuration information is used to indicate that the fourth type of initial BWP is configured for the first type of UE, and the configuration information is also used to indicate that the first type of initial BWP is configured for the first type of UE; the fourth type of initial BWP includes at least a search space for system information, and the fourth type of initial BWP also includes a search space for a paging message and/or a search space for RA.

As an example, the network device determines the configuration information for the first type of UE, where the configuration information is used to indicate that at least one fourth type of initial BWP and at least one first type of initial BWP are configured for the first type of UE. If the first type of UE receives the configuration information, the first type of initial BWP is preferentially used for monitoring paging information, and the fourth type of initial BWP is used for monitoring a response message in a random access procedure and/or system information.

As an example, the network device determines the configuration information for the first type of UE, where the configuration information is used to indicate that at least one fourth type of initial BWP and at least one first type of initial BWP are configured for the first type of UE. If the first type of UE receives the configuration information, the first type of initial BWP and/or the fourth type of initial BWP are preferentially used for monitoring paging information, and the fourth type of initial BWP is used for monitoring a response message in a random access procedure and/or system information.

Thus, in the embodiment of the present disclosure, when the network device configures the fourth type of initial BWP for the first type of UE, the first type of initial BWP can also be configured for the first type of initial BWP, so that the first type of UE can monitor different messages based on different types of initial BWPs. For example, the first type of UE can monitor paging information based on the first type of initial BWP, and monitor a response message in a random access procedure and/or system information based on the fourth type of initial BWP, or monitor paging information and/or a response message in a random access procedure and/or system information. Thus, the first type of UE can perform full monitoring of paging, the response message in the random access procedure, and system information, thereby reducing the possibility of the first type of UE missing message(s).

In some embodiments, the configuration information is also used to indicate that a second type of initial BWP is configured for the first type of UE. The second type of initial BWP is used for monitoring a response message in a random access procedure, and the fourth type of initial BWP is used for monitoring paging information and/or system information.

Here, the configuration information is used to indicate that the fourth type of initial BWP is configured for the first type of UE, and the configuration information is also used to indicate that the second type of initial BWP is configured for the first type of UE. The fourth type of initial BWP includes at least a search space for system information, and the fourth type of initial BWP also includes a search space for a paging message and/or a search space for RA.

As an example, the network device determines the configuration information for the first type of UE, where the configuration information is used to indicate that at least one fourth type of initial BWP and at least one second type of initial BWP are configured for the first type of UE. If the first type of UE receives the configuration information, the second type of initial BWP is preferentially used for monitoring the response message in the random access procedure, and the fourth type of initial BWP is used for monitoring the paging information and/or system information.

Thus, in the embodiments of the present disclosure, the first type of UE can monitor different messages based on different types of initial BWPs. For example, the first type of UE can monitor the response message in the random access procedure based on the second type of initial BWP, and monitor the paging information and/or system information based on the fourth type of initial BWP. Thus, the first type of UE can comprehensively monitor the paging, the response message in the random access procedure and system information, thus reducing the occurrence of a situation where the first type of UE misses message(s).

In some embodiments, the configuration information is also used to indicate that a third type of initial BWP is configured for the first type of UE, where the third type of initial BWP is used for monitoring paging information and/or a response message in a random access procedure, and the fourth type of initial BWP is used for monitoring system information.

Here, the configuration information is used to indicate that a fourth type of initial BWP is configured for the first type of UE, and the configuration information is also used to indicate that a third type of initial BWP is configured for the first type of UE. The fourth type of initial BWP includes at least a search space for system information, and the fourth type of initial BWP also includes a search space for a paging message and/or a search space for RA.

As an example, the network device determines the configuration information for the first type of UE, where the configuration information is used to indicate that at least one fourth type of initial BWP and at least one third type of initial BWP are configured for the first type of UE. If the first type of UE receives the configuration information, the third type of initial BWP is preferentially used for monitoring paging information and/or a response message in a random access procedure, and the fourth type of initial BWP is used for monitoring system information.

Thus, in the embodiments of the present disclosure, the first type of UE can monitor different messages based on different types of initial BWPs. For example, the first type of UE can monitor a response message in a random procedure and/or paging based on the third type of initial BWP, and monitor system information based on the fourth type of initial BWP. Thus, the first type of UE can comprehensively monitor paging, the response message in the random access procedure and system information, thereby reducing the occurrence of a situation where the first type of UE misses message(s).

In some embodiments, if the configuration information is only used to indicate that the fourth type of initial BWP is configured for the first type of UE, the fourth type of initial BWP includes the search space for the system information, the search space for the paging message, and the search space for the RA. In this way, the first type of UE can monitor the system information in the search space for the system information, monitor the paging information in the search space for the paging message, and monitor the response message in the random access procedure in the search space for the RA based on the fourth type of initial BWP.

As an embodiment, the fourth type of initial BWP must be configured for the first type of UE, that is, configuration of the fourth type of initial BWP is mandatory, while configuration of the initial BWP of other types is optional.

It should be noted that those skilled in the art can understand that a method provided in an embodiment of the present disclosure can be performed alone or together with some methods in the embodiments of the present disclosure or some methods in related art.

In some embodiments, the fourth type of initial BWP includes a search space for system information.

In some embodiments, the configuration information is further used to indicate that a first type of initial BWP is configured for the first type of UE, where the first type of initial BWP is used for monitoring paging information, and the fourth type of initial BWP is used for monitoring system information.

Here, the configuration information is used to indicate that the fourth type of initial BWP is configured for the first type of UE, and the configuration information is also used to indicate that the first type of initial BWP is configured for the first type of UE. The fourth type of initial BWP includes a search space for system information.

As an example, the network device determines the configuration information for the first type of UE. If the configuration information is used to indicate that at least one fourth type of initial BWP and at least one first type of initial BWP are configured for the first type of UE, and the fourth type of initial BWP includes a search space for system information, after the configuration information is received, the first type of UE monitors paging information based on the first type of initial BWP, and monitors system information based on the fourth type of initial BWP.

Thus, in the embodiment of the present disclosure, if the fourth type of initial BWP only includes the search space for the system information, the first type of UE can monitor the system information based on the fourth type of initial BWP and monitor the paging information based on the first type of initial BWP.

In some other embodiments, the configuration information is further used to indicate that a second type of initial BWP is configured for the first type of UE, where the second type of initial BWP is used for monitoring a response message in a random access procedure, and the fourth type of initial BWP is used for monitoring system information.

Here, the configuration information is used to indicate that a fourth type of initial BWP is configured for the first type of UE, and the configuration information is also used to indicate that a second type of initial BWP is configured for the first type of UE; the fourth type of initial BWP includes a search space for system information.

As an example, the network device determines the configuration information for the first type of UE. If the configuration information is used to indicate that at least one fourth type of initial BWP and at least one second type of initial BWP are configured for the first type of UE, and the fourth type of initial BWP includes a search space for system information, after the configuration information is received, the first type of UE monitors the response message in the random access procedure based on the second type of initial BWP, and monitors the system information based on the fourth type of initial BWP.

Thus, in the embodiments of the present disclosure, if the fourth type of initial BWP only includes the search space for the system information, the first type of UE can monitor the system information based on the fourth type of initial BWP, and monitor the response message in the random access procedure based on the second type of initial BWP.

In some further embodiments, the configuration information is used to indicate that a fourth type of initial BWP is configured for the first type of UE, and the configuration information is also used to indicate that a first type of initial BWP and a second type of initial BWP are configured for the first type of UE; the fourth type of initial BWP includes a search space for system information.

In this way, after the first type of UE receives the configuration information, the first type of UE can monitor the paging information based on the first type of initial BWP, monitor the response message in the random access procedure based on the second type of initial BWP, and monitor the system information based on the fourth type of initial BWP. Thus, the first type of UE can comprehensively monitor the paging, the response message in the random access procedure and the system information, reducing the occurrence of a situation where the first type of UE misses message(s).

In some embodiments, the configuration information is also used to indicate that a third type of initial BWP is configured for the first type of UE, where the third type of initial BWP is used for monitoring a response message in a random access procedure and/or paging, and the fourth type of initial BWP is used for monitoring system information.

Here, the configuration information is used to indicate that a fourth type of initial BWP is configured for the first type of UE, and the configuration information is also used to indicate that a third type of initial BWP is configured for the first type of UE; the fourth type of initial BWP includes a search space for system information.

As an example, the network device determines the configuration information for the first type of UE. If the configuration information is used to indicate that at least one fourth type of initial BWP and at least one third type of initial BWP are configured for the first type of UE, and the fourth type of initial BWP includes a search space for system information, after the configuration information is received, the first type of UE monitors paging information and/or a response message in a random access procedure based on the third type of initial BWP, and monitors system information based on the fourth type of initial BWP.

In this way, after the first type of UE receives the configuration information, the first type of UE can monitor the paging information and/or the response message in the random access procedure based on the third type of initial BWP and monitor the system information based on the fourth type of initial BWP. Thus, the first type of UE can comprehensively monitor the paging, the response message in the random access procedure and system information, reducing the occurrence of a situation where the first type of UE misses message(s).

It should be noted that those skilled in the art can understand that a method provided in an embodiment of the present disclosure can be performed alone or together with some methods in embodiments of the present disclosure or some methods in related art.

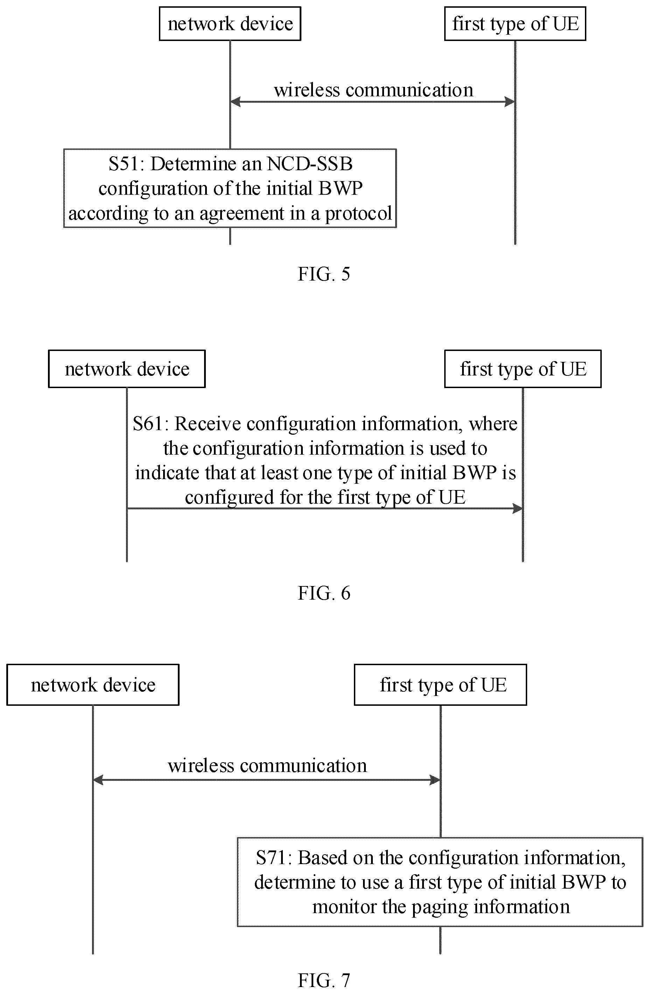

As shown in FIG. 5, an embodiment of the present disclosure provides an initial BWP processing method. The method is performed by a network device. The method includes:
In step S51, an NCD-SSB configuration of the initial BWP is determined according to an agreement in a protocol.

Here, the protocol refers to a wireless communication protocol, or a protocol negotiated between a network device and a UE.

In an embodiment, determining the NCD-SSB configuration of the initial BWP in step S51 includes: determining that the initial BWP includes the NCD-SSB or determining that the initial BWP does not include the NCD-SSB.

In some embodiments of the present disclosure, the initial BWP is the initial BWP in any of the above embodiments. As an example, the initial BWP may be, but is not limited to, at least one of the first type of initial BWP, the second type of initial BWP, the third type of initial BWP, and the fourth type of initial BWP.

In some embodiments, step S51 includes one of the following:
determining that the initial BWP does not include the CD-SSB and includes the NCD-SSB according to the agreement in the protocol;
determining that the initial BWP does not include the CD-SSB but there is a Tracking Reference Signal (TRS) configuration, and determining that the initial BWP does not include the NCD-SSB according to the agreement in the protocol;
determining that the initial BWP includes at most one SSB according to the agreement in the protocol, where the SSB includes the CD-SSB or the NCD-SSB;
determining that the initial BWP includes the NCD-SSB according to the agreement in the protocol.

An embodiment of the present disclosure provides a BWP initial processing method. The method is performed by a network device, and includes one of the following:
determining that the initial BWP does not include the CD-SSB and includes the NCD-SSB according to the agreement in the protocol;
determining that the initial BWP does not include the CD-SSB but there is a TRS configuration, and determining that the initial BWP does not include the NCD-SSB according to the agreement in the protocol;
determining that the initial BWP includes at most one SSB according to the agreement in the protocol, where the SSB includes the CD-SSB or the NCD-SSB;
determining that the initial BWP includes the NCD-SSB according to the agreement in the protocol.

In an embodiment, the configuration information is used to indicate the first type of initial BWP and/or the second type of initial BWP, where the first type of initial BWP includes the NCD-SSB and/or the second type of initial BWP includes the NCD-SSB, where the NCD-SSB is used for synchronization of the first type of UE before paging.

In an embodiment, the NCD-SSB is also used for measurement of a UE in an RRC non-connected state. Here, the UE in the RRC non-connected state includes: a UE in an RRC idle state and/or a UE in an RRC non-connected state. Here, the UE in the RRC non-connected state includes: a first type of UE in the RRC non-connected state.

Here, the CD-SSB may be used to support camping and/or access of the first type of UE, while the NCD-SSB may not consider supporting the camping and/or access of the first type of UE.

In some embodiments, a relevant characteristic of the NCD-SSB include at least one of the following:
a Quasi Co-Location (QCL) relationship being the same as that of a CD-SSB;
a transmit power of the NCD-SSB being the same as or different from a transmit power of the CD-SSB;
a period of the NCD-SSB being greater than or equal to a period of the CD-SSB;
the NCD-SSB being not configured on a synchronization raster;
subcarrier spacing of NCD being the same as or different from subcarrier spacing of the CD-SSB.

Here, a variety of NCD-SSB characteristics are provided to adapt to more application scenarios.

As an example, if the initial BWP configured for the first type of UE in the configuration information includes the NCD-SSB, after the configuration information is received, the first type of UE can jump to the initial BWP configured with the NCD-SSB for synchronization, and then return to a BWP configured with a search space for paging to monitor the PEI or the paging PCI.

In the embodiment of the present disclosure, the initial BWP may be configured with a SSB in a variety of ways (e.g., the CD-SSB or the NCD-SSB), which is beneficial for the first type of UE to monitor paging information and so on after synchronization based on the SSB.

It should be noted that those skilled in the art can understand that a method provided in an embodiment of the present disclosure can be performed alone or together with some methods in embodiments of the present disclosure or some methods in related art.

The following initial BWP processing method is performed by the first type of UE, which is similar to the description of the initial BWP processing method performed by the network device mentioned above. For technical details not disclosed in the embodiment of the initial BWP processing method performed by the first type of UE, reference may be made to the description of the examples of the initial BWP methods performed by the network device, and repeated detailed descriptions are omitted here.

As shown in FIG. 6, an embodiment of the present disclosure provides an initial BWP processing method. The method is performed by a first type of UE. The method includes:
In step S61, configuration information is received. The configuration information is used to indicate that at least one type of initial BWP is configured for the first type of UE.

In some embodiments of the present disclosure, the configuration information may be the configuration information in the above embodiments, the first type of UE may be the first type of UE in the above embodiments, and the initial BWP may be the initial BWP in the above embodiments.

As an example, the first type of UE may be but is not limited to various terminals with a reduced capability. For example, the first type of UE may be a RedCap UE or a 5G NR-lite UE, etc.

As an example, the first type of UE is used to indicate that at least one initial BWP is configured for the first type of UE.

As an example, the configuration information is used to indicate that at least one of the following types of initial BWP is configured for the first type of UE:
a first type of initial BWP used for monitoring paging information;
a second type of initial BWP used for monitoring a response message in a random access procedure;
a third type of initial BWP used for monitoring paging information and/or the response message in the random access procedure;
a fourth type of initial BWP used for monitoring system information.

In some embodiments, receiving configuration information in step S61 includes: receiving a second system information block (SIB1) carrying the configuration information.

An embodiment of the present disclosure provides an initial BWP processing method. The method is performed by a first type of UE, and includes: receiving a second system information block carrying the configuration information.

An embodiment of the present disclosure provides an initial BWP processing method. The method is performed by a first type of UE, and includes: receiving a SIB carrying the configuration information.

In some embodiments of the present disclosure, the second system information block may be the second system information block in the above embodiments. As an example, the second system information block may be SIB-bis.

An embodiment of the present disclosure provides an initial BWP processing method. The method is performed by a first type of UE, and includes: receiving the configuration information, wherein the configuration information is used to indicate that a first type of initial BWP is configured for the first type of UE, wherein the first type of initial BWP is used for monitoring at least one of the following paging information: the PEI and the DCI. In this way, after receiving the configuration information, the first type of UE can monitor the PEI and DCI based on the first type of initial BWP as indicated and configured in the configuration information.

In some embodiments, the first type of initial BWP includes at least one of: a first Control Resource Set (Coreset#0), a second Control Resource Set (Coreset#0-bis), and a Cell Defining Synchronization Signal Block (CD-SSB); and/or, the first type of initial BWP does not include at least one of: a search space for RA and/or a search space for system information; and/or, the first type of initial BWP includes a search space for paging. Here, the search space for paging includes: a search space for the PEI and/or a search space for the paging DCI.

An embodiment of the present disclosure provides an initial BWP processing method. The method is performed by a first type of UE, and includes: receiving configuration information, wherein the configuration information is used to indicate that a second type of initial BWP is configured for the first type of UE, wherein the second type of initial BWP is used for monitoring a response message in a random access procedure. In this way, after receiving the configuration information, the first type of UE can monitor the response message in the random access procedure based on the second type of initial BWP as indicated and configured in the configuration information, which is beneficial to the random access of the first type of UE.

In some embodiments, the second type of initial BWP does not include at least one of: the Coreset#0, the Coreset#0-bis, and the CD-SSB; and/or, the second type of initial BWP does not include at least one of: the search space for paging and/or the search space for system information; and/or, the second type of initial BWP includes the search space for RA.

An embodiment of the present disclosure provides an initial BWP processing method. The method is performed by a first type of UE, and includes: receiving configuration information, wherein the configuration information is used to indicate that a third type of initial BWP is configured for the first type of UE, wherein the third type of initial BWP is used for monitoring paging information and/or a response message in a random access procedure. In this way, after receiving the configuration information, the first type of UE can monitor the paging information and/or the response message in the random access procedure based on the third type of initial BWP as indicated and configured in the configuration information.

In some embodiments, the third type of initial BWP does not include at least one of: the Coreset#0, the Coreset#0-bis, and the CD-SSB; and/or, the third type of initial BWP does not include at least one of the Coreset#0 and the Coreset#0-bis, and the third type of initial BWP includes a Non-Cell Defining Synchronization Signal Block (NCD-SSB); and/or, the third type of initial BWP does not include a search space for system information.

In yet other embodiments, the third type of initial BWP includes a search space for paging and/or a search space for RA.

An embodiment of the present disclosure provides an initial BWP processing method. The method is performed by a first type of UE, and includes: receiving configuration information, wherein the configuration information is used to indicate that a fourth type of initial BWP is configured for the first type of UE, wherein the fourth type of initial BWP is at least used for monitoring system information. In this way, after receiving the configuration information, the first type of UE can monitor the system information based on the fourth type of initial BWP as indicated and configured in the configuration information.

In some embodiments, the fourth type of initial BWP is also used for monitoring paging information and/or a response message in a random access procedure. In this way, after receiving the configuration information, the first type of UE can also monitor the paging information and/or the response message in the random access procedure based on the fourth type of initial BWP as indicated and configured in the configuration information.

In some embodiments, the fourth type of initial BWP includes at least one of: the Coreset#0, the Coreset#0-bis, and the CD-SSB; and/or, the fourth type of initial BWP includes at least one of: the Coreset#0, the Coreset#0-bis, and a search space. Here, the search space may be at least one of: a search space for system information, a search space for RA, and a search space for paging.

In some embodiments, the fourth type of initial BWP includes at least a search space for system information; and the fourth type of initial BWP further includes a search space for paging and/or a search space for RA.

An embodiment of the present disclosure provides an initial BWP processing method. The method is performed by a first type of UE, and includes: receiving configuration information, wherein the configuration information is used to indicate that a fourth type of initial BWP and a first type of initial BWP are configured for the first type of UE, wherein the first type of initial BWP is used for monitoring paging information, and the fourth type of initial BWP is used for monitoring a response message in a random access procedure and/or system information; or, the first type of initial BWP and/or the third type of initial BWP are used for monitoring paging information, and the fourth type of initial BWP is used for monitoring the response message in the random access procedure and/or system information. In this way, after the first type of UE receives the configuration information, the first type of UE can monitor the paging information based on the first type of initial BWP as indicated and configured in the configuration information, and monitor the response message in the random access procedure and/or the system information based on the fourth type of initial BWP as indicated and configured in the configuration information; or after the first type of UE receives the configuration information, the first type of UE can monitor the paging information based on the first type of initial BWP and/or the fourth type of initial BWP as indicated and configured in the configuration information, and monitor the response message in the random access procedure and/or system information based on the fourth type of initial BWP. Here, the fourth type of initial BWP includes the search space for the system information and the search space for the RA; or, the fourth type of initial BWP includes the search space for the system information, the search space for RA, and the search space for the paging message.

An embodiment of the present disclosure provides an initial BWP processing method. The method is performed by a first type of UE, and includes: receiving configuration information, wherein the configuration information is used to indicate that a fourth type of initial BWP and a second type of initial BWP are configured for the first type of UE, wherein the second type of initial BWP is used for monitoring a response message in a random access procedure, and the fourth type of initial BWP is used for monitoring paging information and/or system information. In this way, after receiving the configuration information, the first type of UE can monitor the response message in the random access procedure based on the second type of initial BWP as indicated configured in the configuration information, and monitor the paging information and/or system information based on the fourth type of initial BWP. Here, the fourth type of initial BWP includes a search space for the system information and a search space for paging.

An embodiment of the present disclosure provides an initial BWP processing method. The method is performed by a first type of UE, and includes: receiving configuration information, wherein the configuration information is used to indicate that a fourth type of initial BWP and a third type of initial BWP are configured for the first type of UE, wherein the third type of initial BWP is used for monitoring paging information and/or a response message in a random access procedure, and the fourth type of initial BWP is used for monitoring system information. In this way, after receiving the configuration information, the first type of UE can monitor the paging information and/or the response message in the random access procedure based on the third type of initial BWP as indicated and configured in the configuration information, and monitor or system information based on the fourth type of initial BWP. Here, the fourth type of initial BWP includes a search space for the system information.

An embodiment of the present disclosure provides an initial BWP processing method. The method is performed by a first type of UE, and includes: receiving configuration information, wherein the configuration information is used to indicate that a first type of initial BWP, a second type of initial BWP, and a fourth type of initial BWP are configured for the first type of UE, wherein the first type of initial BWP is used for monitoring paging information, the second type of initial BWP is used for monitoring a response message in a random access procedure, and the fourth type of initial BWP is used for monitoring system information. In this way, after receiving the configuration information, the first type of UE can monitor the paging information based on the first type of initial BWP as indicated and configured in the coordination information, monitor the response message in the random access procedure based on the second type of initial BWP as indicated and configured in the configuration information, and monitor the system information based on the fourth type of initial BWP as indicated and configured in the configuration information. Here, the fourth type of initial BWP includes a search space for the system information.

An embodiment of the present disclosure provides an initial BWP processing method. The method is performed by a first type of UE, and includes: receiving configuration information, wherein the configuration information is used to indicate that a third type of initial BWP and a fourth type of initial BWP are configured for the first type of UE, wherein the third type of initial BWP is used for monitoring paging information and/or a response message in a random access procedure, and the fourth type of initial BWP is used for monitoring system information. In this way, after receiving the configuration information, the first type of UE can monitor paging information and/or the response message in the random access procedure based on the third type of initial BWP as indicated and configured in the coordination information, and monitor the system information based on the fourth type of initial BWP as indicated and configured in the configuration information. Here, the fourth type of initial BWP includes a search space for the system information.

In some embodiments, a relevant characteristic of the NCD-SSB include at least one of the following:
a Quasi Co-Location (QCL) relationship being the same as that of a CD-SSB;
a transmit power of the NCD-SSB being the same as or different from a transmit power of the CD-SSB;
a period of the NCD-SSB being greater than or equal to a period of the CD-SSB;
the NCD-SSB being not configured on a synchronization raster;
subcarrier spacing of the NCD being the same as or different from subcarrier spacing of the CD-SSB.

For the specific descriptions from the perspective of the first type of UE side, reference may be made to the descriptions from the perspective of the network device side, and repeated descriptions will be omitted here.

It should be noted that those skilled in the art can understand that a method provided in an embodiment of the present disclosure can be performed alone or together with some methods in embodiments of the present disclosure or some methods in related art.

An embodiment of the present disclosure provides an initial BWP processing method. The method is performed by a first type of UE, and includes:
based on different types of initial BWPs as indicated and configured in configuration information, performing monitoring of different pieces of information. Here, monitoring of different pieces of information includes: monitoring of paging, monitoring of a response message in a random access procedure, and/or monitoring of system information. The monitoring of paging includes at least: monitoring of a PEI and/or monitoring of a paging DCI.

As shown in FIG. 7, an embodiment of the present disclosure provides an initial BWP processing method. The method is performed by a first type of UE. The method includes:
In step S71, based on the configuration information, it is determined to use the first type of initial BWP to monitor the paging information.

In some embodiments, determining to use the first type of initial BWP to monitor the paging information in step S71 includes one of the following:
based on an index by means of modulo based on at least one first type of initial BWP based on a UE-ID, determining a first type of initial BWP corresponding to a predetermined index to monitor the paging information;
when a connection is released, performing monitoring of the paging information on the corresponding first type of initial BWP;
based on a coverage enhancement level of at least one first type of initial BWP, determining a first type of initial BWP corresponding to a predetermined coverage enhancement level to monitor paging information.

An embodiment of the present disclosure provides an initial BWP processing method. The method is performed by a first type of UE and includes one of the following:
based on an index by means of modulo based on at least one first type of initial BWP based on a UE-ID, determining a first type of initial BWP corresponding to a predetermined index to monitor the paging information;
when a connection is released, performing monitoring of the paging information on a corresponding first type of initial BWP;
based on a coverage enhancement level of at least one first type of initial BWP, determining a first type of initial BWP corresponding to a predetermined coverage enhancement level to monitor the paging information.

Here, releasing the connection is releasing a connection between the first type of UE and the network device.

Here, the level of coverage enhancement can be determined based on a signal threshold measured by the first type of UE. Here, the coverage enhancement level can be divided into N levels, where N is an integer greater than 1. As an example, if the signal threshold measured by the first type of UE based on the first type of initial BWP is greater than or equal to the first threshold value, the coverage enhancement level of the first type of initial BWP is determined to be a first coverage enhancement level low; if the signal threshold measured by the first type of UE based on the first type of initial BWP is less than or equal to a second threshold value, the coverage enhancement level of the first type of initial BWP is determined to be a second coverage enhancement level.

As an example, the first type of UE may perform a modulo operation on at least one first type of initial BWP based on the user equipment identity information (UE-ID) modulo operation to determine the index of at least one first type of initial BWP; and based on the index of at least one first type of initial BWP, a first type of initial BWP corresponding to the index is determined to monitor the paging information. For example, a first type of initial BWP corresponding to a predetermined index is determined to monitor the paging information. Here, the predetermined index may be any one or more indexes of the index(es) of at least one first type of initial BWP.

As an example, the first type of UE may measure the signal threshold on at least one first type of initial BWP respectively to determine the coverage enhancement level corresponding to the at least one first type of initial BWP; and based on the coverage enhancement level of at least one first type of initial BWP, a first type of initial BWP corresponding to a coverage enhancement level is determined to monitor the paging information. For example, a first type of initial BWP corresponding to a predetermined coverage enhancement level is determined to monitor the paging information. Here, the predetermined coverage enhancement level may be any one or more of the coverage enhancement level(s) of the at least one first type of initial BWP.

Thus, in the embodiments of the present disclosure, a suitable first type of initial BWP may be selected for monitoring of the paging information based on the configuration information and a predetermined rule. The predetermined rule may be a first type of initial BWP corresponding to a predetermined index, or a corresponding first type of initial BWP when a first type of UE releases a connection, or a first type of initial BWP corresponding to a predetermined coverage enhancement level, etc.

Of course, in other embodiments, the first type of initial BWP in step S71 may also be replaced by an initial BWP including a search space for paging. The initial BWP including a search space for paging may be, but is not limited to, a first type of initial BWP and/or a fourth type of initial BWP.

An embodiment of the present disclosure provides an initial BWP processing method. The method is performed by a first type of UE, and includes: based on the configuration information and a predetermined rule, determining to use an initial BWP including a search space for paging to monitor the paging information.

An embodiment of the present disclosure provides an initial BWP processing method. The method is performed by a first type of UE and includes one of the following:
based on an index by means of modulo based on at least one initial BWP including a search space for paging based on a UE-ID, determining an initial BWP including the search space for paging corresponding to a predetermined index to monitor paging information;
when a connection is released, performing monitoring of the paging information on a corresponding initial BWP including the search space for paging;
based on a coverage enhancement level of at least one initial BWP including a search space for paging, determining an initial BWP, which includes the search space for paging and corresponds to a predetermined coverage enhancement level, to monitor the paging information.

Thus, in the embodiments of the present disclosure, as long as an initial BWP in the configuration information includes a search space for paging, the initial BWP can be used as the initial BWP determined to be suitable for monitoring the paging information. Thus, the methods can be adapted to more application scenarios.

It should be noted that those skilled in the art can understand that a method provided in an embodiment of the present disclosure can be performed alone or together with some methods in embodiments of the present disclosure or some methods in related art.

In order to further explain any embodiment of the present disclosure, a specific embodiment is provided below.

An embodiment of the present disclosure provides an initial BWP processing method. The method is performed by a communication device. The communication device includes a network device and a first type of UE. The initial BWP processing method includes the following steps:
In step S81, the network device determines configuration information for the first type of UE, where the configuration information is used to indicate that at least one type of initial BWP is configured for the first type of UE.

In an optional embodiment, the network device sends the configuration information to the first type of UE.

In an optional embodiment, the network device sends SIB1-bis carrying the configuration information to the first type of UE.

Here, the first type of UE may be an enhanced RedCap UE or a 5G NR-lite UE introduced in the R18 version. The initial BWP is a downlink initial BWP.

The configuration information in step S81 indicates that at least one initial BWP is configured for the first type of initial BWP. The configuration information in step S81 is used to indicate the configuration of at least one of the following cases:

First case: the configuration information is used to indicate that at least one first type of initial BWP is configured for the first type of UE; the first type configuration is used for monitoring PEI and/or paging DCI; and the first type of initial BWP does not include at least one of the following: a first Control Resource Set (Coreset#0), a second Control Resource Set (Coreset#0-bis), and a Cell Defining Synchronization Signal Block (CD-SSB) (but there may be an NCD-SSB), and/or the first type of initial BWP does not include: a search space for a random access response (RA) and/or a search space for system information, and/or the first type of initial BWP includes a search space for paging.

Second case: the configuration information is used to indicate that at least one second type of initial BWP is configured for the first type of UE; the second type of initial BWP is used for monitoring a response message in a random access procedure; and the second type of initial BWP does not include at least one of the following: the Coreset#0, the Coreset#0-bis, and an SSB, and/or the second type of initial BWP does not include: a search space for paging and/or a search space for system information, and/or the second type of initial BWP includes a search space for RA. Here, the SSB includes a CD-SSB and/or an NCD-SSB.

Third case: the configuration information is used to indicate that at least one third type of initial BWP is configured for the first type of UE; the third type of initial BWP is used for monitoring paging information and/or a response message in a random access procedure; and the third type of initial BWP does not include at least one of the following: the Coreset#0, the Coreset#0-bis, and the CD-SSB, and/or the third type of initial BWP does not include at least one of the Coreset#0 and the Coreset#0-bis, and the third type of initial BWP includes a Non-Cell Defining Synchronization Signal Block (NCD-SSB), and/or the third type of initial BWP does not include a search space for system information.

Fourth case: the configuration information is used to indicate that at least one fourth type of initial BWP is configured for the first type of UE; the fourth type of initial BWP is used for monitoring at least system information; and the fourth type of initial BWP includes at least one of the following: the Coreset#0, the Coreset#0-bis, and the CD-SSB, and/or the fourth type of initial BWP includes at least one of the following: the Coreset#0, the Coreset#0-bis, and a search space. Here, the search space includes: a search space for paging, a search space for RA, and a search space for system information.

Here, if the fourth type of initial BWP includes the search space for system information, the fourth type of initial BWP can be used for monitoring the system information. If the fourth type of initial BWP also includes the search space for RA, the fourth type of initial BWP can be used for monitoring the search space for RA, and/or, if the fourth type of initial BWP also includes the search space for system information, the fourth type of initial BWP can be used for monitoring the system information.

In the fourth case, at least one of the following working modes is included:
Working mode 1: the fourth type of initial BWP includes the search space for system information, and the fourth type of initial BWP also includes the search space for paging and/or the search space for RA. Here, the network must configure the fourth type of initial BWP, and the first type of initial BWP, the second type of initial BWP, and the third type of initial BWP can be optionally configured.

Working mode 1 includes at least one of the following cases:
Fifth case: the configuration information is used to indicate that at least one first type of initial BWP and at least one fourth type of initial BWP are configured for the first type of UE. After receiving the configuration information, the first type of UE monitors paging information based on the first type of initial BWP as indicated and configured in the configuration information, or monitors paging information based on the first type of initial BWP and the fourth type of initial BWP, and monitors a response message in a random access procedure and/or system information based on the fourth type of initial BWP as indicated and configured in the configuration information;
Sixth case: the configuration information is used to indicate that at least one second type of initial BWP and at least one fourth type of initial BWP are configured for the first type of UE. After receiving the configuration information, the first type of UE monitors a response message in a random access procedure based on the second type of initial BWP as indicated and configured in the configuration information, and monitors the paging information and/or system information based on the fourth type of initial BWP as indicated and configured in the configuration information.

Seventh case: the configuration information is used to indicate that at least one third type of initial BWP and at least one fourth type of initial BWP are configured for the first type of UE. After receiving the configuration information, the first type of UE monitors paging information and/or a response message in a random access procedure based on the third type of initial BWP as indicated and configured in the configuration information, and monitors system information based on the fourth type of initial BWP as indicated and configured in the configuration information.

Eighth case: the configuration information is used to indicate that at least one fourth type of initial BWP is configured for the first type of UE; and the fourth type of initial BWP includes a search space for system information, a search space for paging, and a search space for RA. After receiving the configuration information, the first type of UE monitors paging information and/or a response message in a random access procedure and/or system information based on the fourth type of initial BWP as indicated and configured in the configuration information.

Working mode 2: the fourth type of initial BWP only includes a search space for system information. Working mode 2 includes at least one of the following cases:

Ninth case: the configuration information is used to indicate that at least one first type of initial BWP, second type of initial BWP and fourth type of initial BWP are configured for the first type of UE. After receiving the configuration information, the first type of UE monitors paging information based on the first type of initial BWP as indicated and configured in the configuration information, monitors a response message in a random access procedure based on the second type of initial BWP as indicated and configured in the configuration information, and monitors system information based on the fourth type of initial BWP as indicated configured in the configuration information.

Tenth case: the configuration information is used to indicate that at least one third-type of initial BWP and fourth-type of initial BWP are configured for the first-type UE. After receiving the configuration information, the first-type UE monitors paging information and/or a response message in a random access procedure based on the third-type of initial BWP as indicated and configured in the configuration information, and monitors system information based on the fourth type of initial BWP as indicated and configured in the configuration information.

In the above examples, whether an initial BWP includes the configuration of the Coreset#0 or the Coreset#0-bis is determined based on whether SIB1-bis is scheduled by the Coreset#0 or the Coreset#0-bis; if SIB1-bis is scheduled by the Coreset#0, the configured initial BWP may include the Coreset#0; or, if SIB1-bis is scheduled by the Coreset#0-bis, the configured initial BWP may include the Coreset#0-bis.

The following is a specific embodiment of Working mode 1:

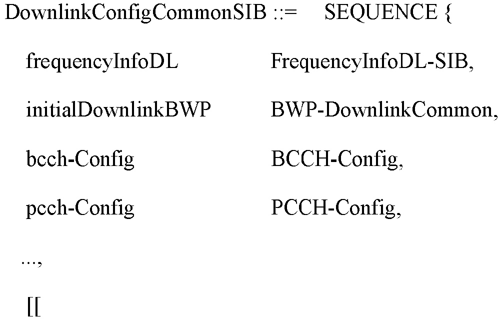

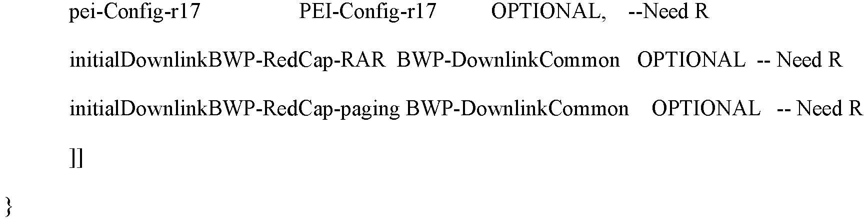

Here is the configuration of a fourth type of initial downlink BWP (initialDownlinkBWP) of a primary serving cell (Pcell). The network device configures the configuration information for the first type of UE, and the configuration information indicates that at least one fourth type of initial downlink BWP (i.e., the initialDownlinkBWP mentioned above) is configured for the first type of UE; the fourth initial downlink BWP includes the entire Coreset#0 or Coreset#0-bis of the serving cell. When the first type of UE receives the configuration information, the first type of UE applies a position and a bandwidth (for example, the first type of UE determines a frequency position of the signal described in relation to the position and bandwidth), but keeps the Coreset#0 or Coreset#0-bis with the value until after receiving RRC setup or RRC resume or RRC reestablishment. Here, the fourth type of initial downlink BWP can be the fourth type of initial BWP in the above embodiments.

That is, it can be as follows:
The initial downlink BWP configuration for a PCell. The network configures the locationAndBandwidth so that the initial downlink BWP contains the entire CORESET#0 or CORESET#0 bis of this serving cell in the frequency domain. The UE applies the locationAndBandwidth upon reception of this field (e.g., to determine the frequency position of signals described in relation to this locationAndBandwidth) but it keeps CORESET#0 or CORESET#0 bis until after reception of RRCSetup/RRCResume/RRCReestablishment.

Here, the configuration of the second type of initial downlink BWP is initialDownlinkBWP-RedCap-RAR. The first type of UE uses the second type of downlink initial BWP to monitor a response message in a random access procedure. If the second type of downlink initial BWP does not include the entire Coreset#0 or Coreset#0-bis, the first type of UE uses the second type of initial downlink BWP to receive downlink message(s) during the initial access (Msg2, MsgB, Msg4) and/or after the initial access. Here, the second type of initial downlink BWP can be the second type of initial BWP in the above embodiments. At this time, the fourth type of initial downlink BWP does not need to be configured with the search space for RA.

That is, the implementation may be as follows:
If present, RedCap UEs use it for RAR. If the locationAndBandwidth of this BWP does not contain the entire CORESET#0 or CORESET#0 bis, the UE uses this BWP for receiving DL messages during initial access (Msg2, MsgB, Msg4) and after initial access. InitialDownlinkBWP-R18.

If this field does not exist, the terminal uses the fourth type of initial downlink BWP to receive the response message in the random access procedure.

Here, the configuration of the first type of initial downlink BWP is initialDownlinkBWP-RedCap-paging. The first type of UE uses the first type of downlink initial BWP to monitor paging information. If this field does not exist, the terminal uses the fourth type of initial downlink BWP to receive paging message(s).

In another optional embodiment, the fourth type of initial downlink BWP includes a search space for RA and/or a search space for paging.

In step S82, the network device determines an NCD configuration of the initial BWP according to an agreement in a protocol. Step S82 includes one of the following:
determining that the initial BWP does not include the CD-SSB and includes the NCD-SSB according to the agreement in the protocol;
determining that the initial BWP does not include the CD-SSB but there is a TRS configuration, and determining that the initial BWP does not include the NCD-SSB according to the agreement in the protocol;
determining that an initial BWP includes at most one SSB according to the agreement in the protocol, where the SSB includes the CD-SSB or the NCD-SSB;
determining that the initial BWP includes the NCD-SSB according to the agreement in the protocol.

Here, if the initial BWP includes the NCD-SSB, after receiving the configuration information, the first type of UE can jump to the initial BWP configured with the NCD-SSB for synchronization, and then return to a BWP configured with a search space for paging to monitor PEI or paging PCI.

Here, a relevant characteristic of the NCD-SSB includes at least one of the following:
a Quasi Co-Location (QCL) relationship being the same as that of the CD-SSB;
a transmit power of the NCD-SSB being the same as or different from a transmit power of the CD-SSB;
a period of the NCD-SSB being greater than or equal to a period of the CD-SSB;
the NCD-SSB being not configured on a synchronization raster;
subcarrier spacing of the NCD being the same as or different from subcarrier spacing of the CD-SSB.

In an optional embodiment, the initial BWP in step S82 may be a first type of initial BWP and/or a second type of initial BWP.

In an optional embodiment, the NCD-SSB is used for measurement of a UE in an RRC non-connected state.

In step S83, the first type of UE receives the configuration information, and determines to use the first type of initial BWP to monitor the paging information according to the configuration information and a predetermined rule. Step S83 includes one of the following:
based on an index by means of modulo based on at least one first type of initial BWP based on a UE-ID, determining a first type of initial BWP corresponding to a predetermined index to monitor paging information;
when a connection is released, performing monitoring of the paging information on a corresponding first type of initial BWP;
based on a coverage enhancement level of at least one first type of initial BWP, determining a first type of initial BWP corresponding to a predetermined coverage enhancement level to monitor paging information.

In an optional embodiment, the first type of UE may perform modulo on at least one first type of initial BWP based on the user equipment identity information (UE-ID) modulo operation to determine the index of at least one first type of initial BWP; and based on the index of at least one first type of initial BWP, a first type of initial BWP corresponding to the index is determined to monitor paging information. For example, a first type of initial BWP corresponding to a predetermined index is determined to monitor the paging information.

In an optional embodiment, the first type of UE may perform modulo on at least one downlink initial BWP (including a first type of initial BWP or a fourth initial BWP) including a search space for paging based on the user equipment identity information (UE-ID) modulo operation to determine the index of at least one initial BWP; and based on the index of the at least one initial BWP, an initial BWP corresponding to the index is determined to monitor the paging information.

In another optional embodiment, the first type of UE may measure the signal threshold on at least one first type of initial BWP respectively to determine the coverage enhancement level corresponding to at least one first type of initial BWP; and based on the coverage enhancement level of at least one first type of initial BWP, a first type of initial BWP corresponding to the coverage enhancement level is determined to monitor paging information.

It should be noted that those skilled in the art can understand that a method provided in an embodiment of the present disclosure can be performed alone or together with some methods in the embodiments of the present disclosure or some methods in related art.

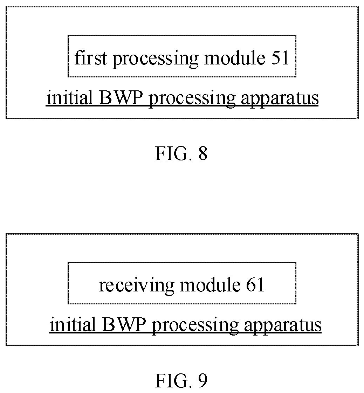

As shown in FIG. 8, an embodiment of the present disclosure provides an initial BWP processing apparatus, including:
a first processing module 51 configured to determine configuration information for a first type of UE, wherein the configuration information is used to indicate that at least one type of initial BWP is configured for the first type of UE.

The BWP processing apparatus provided by the embodiment of the present disclosure may be applied to the first type of UE.

An embodiment of the present disclosure provides an initial BWP processing apparatus, including: a sending module configured to send the configuration information.

An embodiment of the present disclosure provides an initial BWP processing apparatus, including: a sending module configured to send a second system message block carrying the configuration information.

In some embodiments, the configuration information is used to at least indicate that a first type of initial BWP is configured for the first type of UE, wherein the first type of initial BWP is used for monitoring paging information.

In some embodiments, the first type initial BWP is used for monitoring at least one of the following paging information: a PEI and a paging DCI.

In some embodiments, the first type initial BWP does not include at least one of: a Coreset#0, a Coreset#0-bis, and a Cell-Defining Synchronization Signal Block (CD-SSB); and/or, the first type initial BWP does not include: a search space for RA and/or a search space for system information; and/or, the first type initial BWP includes a search space for paging.

In some other embodiments, the first type initial BWP does not include at least one of a Coreset#0 and a Coreset#0-bis, and the first type initial BWP includes an NCD-SSB.

In some embodiments, the configuration information is used to at least indicate that a second type initial BWP is configured for the first type UE, wherein the second type initial BWP is used for monitoring a response message in a random access procedure.

In some embodiments, the second type initial BWP does not include at least one of: a Coreset#0, a Coreset#0-bis, and a CD-SSB; and/or, the second type initial BWP does not include: a search space for paging and/or a search space for system information; and/or, the second type initial BWP includes a search space for RA.

In some embodiments, the configuration information is used to at least indicate that a third type of initial BWP is configured for the first type of UE, wherein the third type of initial BWP is used for monitoring paging information and/or a response message in a random access procedure.

In some embodiments, the third type initial BWP does not include at least one of: a Coreset#0, a Coreset#0-bis, and a CD-SSB; and/or, the third type initial BWP does not include at least one of the Coreset#0 and the Coreset#0-bis, and the third type initial BWP includes an NCD-SSB; and/or, the third type initial BWP does not include a search space for system information.

In some embodiments, the configuration information is used to at least indicate that a fourth type of initial BWP is configured for the first type of UE, wherein the fourth type of initial BWP is at least used for monitoring system information.

In some embodiments, the fourth type initial BWP is also used for monitoring paging information and/or a response message in a random access procedure.

In some embodiments, the fourth type initial BWP includes at least one of: a Coreset#0, a Coreset#0-bis, and a CD-SSB; and/or, the fourth type initial BWP includes at least one of: a Coreset#0, a Coreset#0-bis, and a search space.

In some embodiments, the fourth type initial BWP includes at least a search space for system information; and the fourth type initial BWP further includes a search space for paging and/or a search space for RA.

In some embodiments, the configuration information is used to indicate that a first type of initial BWP and a fourth type of initial BWP are configured for a first type of UE, wherein the first type of initial BWP is used for monitoring paging information, and the fourth type of initial BWP is used for monitoring a response message in a random access procedure and/or system information; or, the first type of initial BWP and/or the third type of initial BWP are used for monitoring paging information, and the fourth type of initial BWP is used for monitor a response message in a random access procedure and/or system information.

In some embodiments, the configuration information is used to indicate that a second type initial BWP and a fourth type initial BWP are configured for a first type UE, wherein the second type initial BWP is used for monitoring a response message in a random access procedure, and the fourth type initial BWP is used for monitoring paging information and/or system information.

In some embodiments, the configuration information is also used to indicate that a third type of initial BWP and a fourth type of initial BWP are configured for the first type of UE, wherein the third type of initial BWP is used for monitoring paging information and/or a response message in a random access procedure, and the fourth type of initial BWP is used for monitoring system information.

In some embodiments, the fourth type initial BWP includes a search space for system information.

In some embodiments, the configuration information is further used to indicate that a first type initial BWP is configured for the first type UE, wherein the first type initial BWP is used for monitoring paging information, and the fourth type initial BWP is used for monitoring system information.

In some embodiments, the configuration information is used to indicate that a second type initial BWP and a fourth type initial BWP are configured for a first type UE, wherein the second type initial BWP is used for monitoring a response message in a random access procedure, and the fourth type initial BWP is used for monitoring system information.

In some embodiments, the configuration information is used to indicate that a first type of initial BWP, a second type of initial BWP and a fourth type of initial BWP are configured for a first type of UE, wherein the first type of initial BWP is used for monitoring paging information, the second type of initial BWP is used for monitoring a response message in a random access procedure, and the fourth type of initial BWP is used for monitoring system information.

In some embodiments, the configuration information is used to indicate that a third type initial BWP and a fourth type initial BWP are configured for the first type UE, wherein the third type initial BWP is used for monitoring a response message in a random access procedure and/or paging, and the fourth type initial BWP is used for monitoring system information.

An embodiment of the present disclosure provides an initial BWP processing apparatus, including: a first processing module 51 configured to determine an NCD-SSB configuration of the initial BWP according to an agreement in a protocol.

An embodiment of the present disclosure provides an initial BWP processing apparatus, including: a first processing module 51 configured to perform one of the following:
determining that the initial BWP does not include a CD-SSB and includes an NCD-SSB according to the agreement in the protocol;
determining that the initial BWP does not include a CD-SSB, but there is a Tracking Reference Signal (TRS) configuration, and determining that the initial BWP does not include the NCD-SSB according to the agreement in the protocol;
determining that the initial BWP includes at most one SSB according to the agreement in the protocol, where the SSB includes the CD-SSB or the NCD-SSB;
determining that the initial BWP includes the NCD-SSB according to the agreement in the protocol.

In some embodiments, the configuration information is used to indicate a first type initial BWP and/or a second type initial BWP, wherein the first type initial BWP includes an NCD-SSB and/or the second type initial BWP includes the NCD-SSB, wherein NCD-SSB is used for synchronization of the first type UE before paging.

In some embodiments, the relevant characteristic(s) of the NCD-SSB includes(include) at least one of the following:
a Quasi Co-Location (QCL) relationship being the same as that of a CD-SSB;
a transmit power of the NCD-SSB being the same as or different from a transmit power of the CD-SSB;
a period of the NCD-SSB being greater than or equal to a period of the CD-SSB;
the NCD-SSB being not configured on a synchronization raster;
subcarrier spacing of NCD being the same as or different from subcarrier spacing of the CD-SSB.

In some embodiments, the NCD-SSB is used for measurement of a UE in an RRC non-connected state.

As shown in FIG. 9, an embodiment of the present disclosure provides an initial BWP processing apparatus, including:
a receiving module 61 configured to receive configuration information as an IE, wherein the configuration information is used to indicate that at least one type of initial Bandwidth Part (BWP) is configured for a first type of UE.

The initial BWP processing apparatus provided by the embodiment of the present disclosure may be applied to the first type of UE.

An embodiment of the present disclosure provides an initial BWP processing apparatus, including: a receiving module configured to receive a second system message block carrying the configuration information.

An embodiment of the present disclosure provides an initial BWP processing apparatus, including: a receiving module configured to receive a SIB carrying the configuration information.

In some embodiments of the present disclosure, the configuration information may be the configuration information in the above embodiments. As an example, the configuration information is used to indicate that at least one of the following types of initial BWP is configured for the first type of UE:
a first type of initial BWP used for monitor paging information;
a second type of initial BWP used for monitoring a response message in a random access procedure;
a third type of initial BWP used for monitoring paging information and/or a response message in a random access procedure;
a fourth type of initial BWP used for monitoring system information.

In some embodiments of the present disclosure, the first type initial BWP, the second type initial BWP, the third type initial BWP and the fourth type initial BWP are respectively the first type initial BWP, the second type initial BWP, the third type initial BWP and the fourth type initial BWP in the above embodiments.

An embodiment of the present disclosure provides an initial BWP processing apparatus, including: a second processing module configured to monitor different pieces of information based on different types of initial BWPs as indicated and configured in the configuration information. Here, monitoring different pieces of information includes: monitoring paging, monitoring a response message in a random access procedure and/or monitoring system information. Monitoring of paging includes at least: monitoring a PEI and/or monitoring a paging DCI.

An embodiment of the present disclosure provides an initial BWP processing apparatus, including: a second processing module configured to determine to use the first type of initial BWP to monitor paging information based on the configuration information.

An embodiment of the present disclosure provides an initial BWP processing apparatus, including: a second processing module configured to perform at least one of the following:
based on an index by means of modulo based on at least one first type of initial BWP based on a UE-ID, determining a first type initial BWP corresponding to a predetermined index to monitor paging information;
when a connection is released, performing monitoring of paging information on a corresponding first type of initial BWP;
based on a coverage enhancement level of at least one first type of initial BWP, determining a first type of initial BWP corresponding to a predetermined coverage enhancement level to monitor the paging information.

It should be noted that those skilled in the art can understand that an apparatus provided in an embodiment of the present disclosure can be implemented alone or together with some apparatuses in embodiments of the present disclosure or some devices in related art.

Regarding the apparatuses in the above embodiments, the specific manner in which each module performs operations has been described in detail in the embodiments of the methods, and repeated descriptions will not be provided here.

An embodiment of the present disclosure provides a communication device, including:
a processor; and
a memory configured to store instructions executable by the processor;
where the processor is configured to perform the initial BWP processing method according to any embodiment of the present disclosure when running the executable instructions.

In an embodiment, the communication device may include but is not limited to at least one of: a network device or a first type of UE.

The processor may include various types of storage medium, which may be non-transitory computer storage medium that can continue to memorize information stored thereon after the user equipment is powered off.

The processor may be connected to the memory through a bus or the like, and may be configured to read the executable program stored in the memory, for example, at least one of the methods shown in FIG. 3 to FIG. 7.

An embodiment of the present disclosure further provides a computer storage medium storing a computer executable program. When the executable program is executed by a processor, the initial BWP processing method according to any embodiment of the present disclosure is implemented, for example, at least one of the methods shown in FIG. 3 to FIG. 7.

Regarding the apparatuses or storage medium in the above embodiments, the specific manner in which each module performs the operations has been described in detail in the embodiments of the methods, and will not be elaborated here.

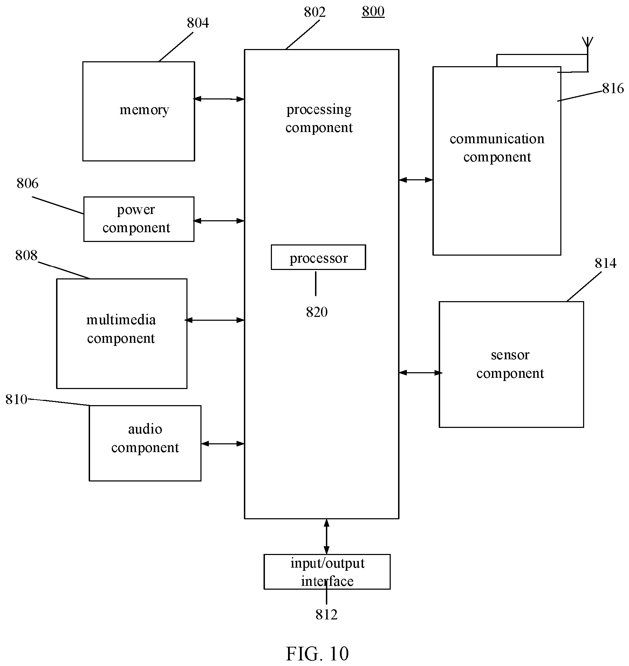

FIG. 10 is a block diagram of user equipment 800 according to an example embodiment. For example, the user equipment 800 may be a mobile phone, a computer, digital broadcast user equipment, a messaging device, a gaming console, a tablet, a medical device, exercise equipment, a personal digital assistant, and the like.

Referring to FIG. 10, the user equipment 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the user equipment 800, such as the operations associated with display, telephone calls, data communications, camera operations, and recording operations. The processing component 802 may include one or more processors 820 to execute instructions to perform all or part of the steps in the above described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the user equipment 800. Examples of such data include instructions for any applications or methods operated on the user equipment 800, contact data, phonebook data, messages, pictures, video, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the user equipment 800. The power component 806 may include a power management system, one or more power sources, and any other components associated with the generation, management, and distribution of power in the user equipment 800.

The multimedia component 808 includes a screen providing an output interface between the user equipment 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front camera and/or a rear camera. The front camera and the rear camera may receive an external multimedia datum while the user equipment 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone ("MIC") configured to receive an external audio signal when the user equipment 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the user equipment 800. For instance, the sensor component 814 may detect an open/closed status of the user equipment 800, relative positioning of components, e.g., the display and the keypad, of the user equipment 800, a change in position of the user equipment 800 or a component of the user equipment 800, a presence or absence of user contact with the user equipment 800, an orientation or an acceleration/deceleration of the user equipment 800, and a change in temperature of the user equipment 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the user equipment 800 and other devices. The user equipment 800 can access a wireless network based on a communication standard, such as WiFi, 4G, or 5G, or a combination thereof. In one example embodiment, the communication component 816 receives a broadcast signal or broadcast associated information from an external broadcast management system via a broadcast channel. In one example embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In example embodiments, the user equipment 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In example embodiments, there is also provided a non-transitory computer-readable storage medium including instructions, such as the memory 804 including instructions executable by the processor 820 in the user equipment 800, for performing the above-described methods. For example, the non-transitory computer-readable storage medium may be a ROM, a Random Access Memory (RAM), a CD-ROM, a magnetic tape, a floppy disc, an optical data storage device, and the like.

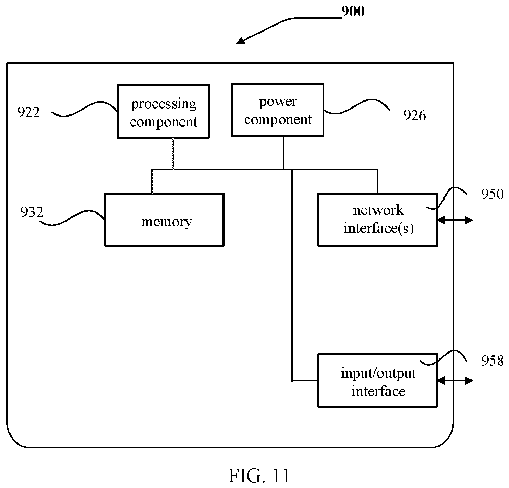

As shown in FIG. 11, an embodiment of the present disclosure shows a structure of a base station. For example, the base station 900 may be provided as a network side device. Referring to FIG. 11, the base station 900 includes a processing component 922 that further includes one or more processors, and memory resources represented by a memory 932 for storing instructions executable by the processing component 922, such as application programs. The application programs stored in the memory 932 may include one or more modules each corresponding to a set of instructions. Further, the processing component 922 is configured to execute the instructions to perform any of the above described methods which are applied at the base station.

The base station 900 may also include a power component 926 configured to perform power management of the base station 900, wired or wireless network interface(s) 950 configured to connect the base station 900 to a network, and an input/output (I/O) interface 958. The base station 900 may operate based on an operating system stored in the memory 932, such as Windows Server^{™}, Mac OS X^{™}, Unix^{™}, Linux^{™}, FreeBSD^{™}, or the like.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the present disclosure as come within known or customary practice in the art. It is intended that the specification and examples be considered as exemplary only, with a true scope and spirit of the disclosure being indicated by the following claims.

It will be appreciated that the present disclosure is not limited to the exact construction that has been described above and illustrated in the accompanying drawings, and that various modifications and changes can be made without departing from the scope thereof. It is intended that the scope of the disclosure only be limited by the appended claims.

## Claims

1. An initial BWP processing method, performed by a network device, the method comprising:
determining configuration information for a first type of User Equipment (UE), wherein the configuration information is used to indicate that at least one type of initial Bandwidth Part (BWP) is configured for the first type of UE.

2. The method according to claim 1, comprising:
sending the configuration information.

3. The method according to claim 2, wherein sending the configuration information comprises:
sending a second System Information Block (SIB1) carrying the configuration information.

4. The method according to any one of claims 1 to 3, wherein the configuration information is used to at least indicate that a first type of initial BWP is configured for the first type of UE, wherein the first type of initial BWP is used for monitoring paging information.

5. The method according to claim 4, wherein the paging information is at least one of:
Paging Early Indication (PEI);
Paging Downlink Control Information (Paging DCI).

6. The method according to claim 4, wherein:
the first type of initial BWP does not comprise at least one of: a first Control Resource Set (Coreset#0), a second Control Resource Set (Coreset#0-bis), and a Cell Defining Synchronization Signal Block (CD-SSB); and/or
the first type of initial BWP does not comprise at least one of the Coreset#0 and the Coreset#0-bis, and the first type of initial BWP comprises a Non-Cell Defining Synchronization Signal Block (NCD-SSB); and/or
the first type of initial BWP does not comprise: a search space for Random Access (RA) and/or a search space for system information; and/or
the first type of initial BWP comprises a search space for paging.

7. The method according to any one of claims 1 to 3, wherein the configuration information is used to at least indicate that a second type of initial BWP is configured for the first type of UE, wherein the second type of initial BWP is used for monitoring a response message in a random access procedure.

8. The method according to claim 7, wherein:
the second type of initial BWP does not comprise at least one of: a Coreset#0, a Coreset#0-bis, an NCD-SSB, and a CD-SSB; and/or
the second type of initial BWP does not comprise: a search space for paging and/or a search space for system information; and/or
the second type of initial BWP comprises a search space for Random Access (RA).

9. The method according to any one of claims 1 to 3, wherein the configuration information is used to at least indicate that a third type of initial BWP is configured for the first type of UE, wherein the third type of initial BWP is used for monitoring paging information and a response message in a random access procedure.

10. The method according to claim 9, wherein:
the third type of initial BWP does not comprise at least one of: a Coreset#0, a Coreset#0-bis, and a CD-SSB; and/or
the third type of initial BWP does not comprise at least one of the Coreset#0 and the Coreset#0-bis, and the third type of initial BWP comprises a Non-Cell Defining Synchronization Signal Block (NCD-SSB); and/or
the third type of initial BWP does not comprise a search space for system information.

11. The method according to any one of claims 1 to 3, wherein the configuration information is used to at least indicate that a fourth type of initial BWP is configured for the first type of UE, wherein the fourth type of initial BWP is at least used for monitoring system information.

12. The method according to claim 11, wherein the fourth type of initial BWP is further used for monitoring paging and/or a response message in a random access procedure.

13. The method according to claim 11, wherein the fourth type of initial BWP comprises at least one of: a first Control Resource Set (Coreset#0), a second Control Resource Set (Coreset#0s), and a CD-SSB;

14. The method according to claim 11, wherein the fourth type of initial BWP at least comprises a search space for system information, and the fourth type of initial BWP further comprises a search space for paging and/or a search space for Random Access (RA).

15. The method according to claim 14, wherein the configuration information is further used to indicate that a first type of initial BWP is configured for the first type of UE;
wherein the first type of initial BWP is used for monitoring paging information, and the fourth type of initial BWP is used for monitoring a response message in a random access procedure and/or system information; or
wherein the first type of initial BWP and/or the third type of initial BWP is used for monitoring paging information, and the fourth type of initial BWP is used for monitoring a response message in a random access procedure and/or system information.

16. The method according to claim 14, wherein the configuration information is further used to indicate that a second type of initial BWP is configured for the first type of UE;
wherein the second type of initial BWP is used for monitoring a response message in a random access procedure, and the fourth type of initial BWP is used for monitoring paging information and/or system information.

17. The method according to claim 14, wherein the configuration information is further used to indicate that a third type of initial BWP is configured for the first type of UE;
wherein the third type of initial BWP is used for monitoring paging and/or a response message in a random access procedure, and the fourth type of initial BWP is used for monitoring system information.

18. The method according to claim 11, wherein the fourth type of initial BWP comprises a search space for system information.

19. The method according to claim 18, wherein the configuration information is further used to indicate that a first type of initial BWP is configured for the first type of UE;
wherein the first type of initial BWP is used for monitoring paging information, and the fourth type of initial BWP is used for monitoring system information.

20. The method according to claim 18, wherein the configuration information is further used to indicate that a second type of initial BWP is configured for the first type of UE;
wherein the second type of initial BWP is used for monitoring a response message in a random access procedure, and the fourth type of initial BWP is used for monitoring system information.

21. The method according to claim 18, wherein the configuration information is further used to indicate that a third type of initial BWP is configured for the first type of UE;
wherein the third type of initial BWP is used for monitoring a response message in a random access procedure and/or paging information, and the fourth type of initial BWP is used for monitoring system information.

22. The method according to any one of claims 1 to 3, comprising:
determining an NCD-SSB configuration of the initial BWP according to an agreement in a protocol.

23. The method according to claim 22, wherein determining the NCD-SSB configuration of the initial BWP according to the agreement in the protocol comprises one of:
determining that the initial BWP does not comprise a CD-SSB and comprises an NCD-SSB according to the agreement in the protocol;
determining that the initial BWP does not comprise the CD-SSB but there is a Tracking Reference Signal (TRS) configuration and determining that the initial BWP does not comprise the NCD-SSB according to the agreement in the protocol;
determining that one of the initial BWP comprises at most one SSB according to the agreement in the protocol, wherein the SSB comprises the CD-SSB or the NCD-SSB;
determining that the initial BWP comprises the NCD-SSB according to the agreement in the protocol.

24. The method according to claim 22, wherein the configuration information is used to indicate the first type of initial BWP and/or the second type of initial BWP, the first type of initial BWP comprises an NCD-SSB and/or the second type of initial BWP comprises the NCD-SSB, wherein the NCD-SSB is used for synchronization of the first type of UE before paging or measurement in a random access procedure.

25. The method according to claim 22, wherein a relevant characteristic of the NCD-SSB comprises at least one of:
a Quasi Co-Location (QCL) relationship being the same as that of a CD-SSB;
a transmit power of the NCD-SSB being the same as or different from a transmit power of the CD-SSB;
a period of the NCD-SSB being greater than or equal to a period of the CD-SSB;
the NCD-SSB being not configured on a synchronization raster;
subcarrier spacing of the NCD is the same as or different from subcarrier spacing of the CD-SSB.

26. The method according to claim 22, wherein the NCD-SSB is further used for measurement of the UE in an RRC non-connected state.

27. An initial BWP processing method, performed by a first type of UE, the method comprising:
receiving configuration information, wherein the configuration information is used to indicate that at least one type of initial Bandwidth Part (BWP) is configured for the first type of UE.

28. The method according to claim 27, wherein receiving the configuration information comprises:
receiving a second System Information Block (SIB1) carrying the configuration information.

29. The method according to claim 27 or 28, wherein the configuration information is used to indicate that at least one of following types of initial BWP is configured for the first type of UE:
a first type of initial BWP used for monitoring paging;
a second type of initial BWP used for monitoring a response message in a random access procedure;
a third type of initial BWP used for monitoring paging and/or a response message in a random access procedure;
a fourth type of initial BWP used for monitoring system information.

30. The method according to claim 29, comprising:
based on the configuration information, determining to use the first type of initial BWP to monitor paging information.

31. The method according to claim 30, wherein determining to use the first type of initial BWP to monitor the paging information comprises one of:
based on an index by means of modulo based on at least one first type of initial BWP based on a UE-ID, determining a first type of initial BWP corresponding to a predetermined index to monitor the paging information;
when a connection is released, performing monitoring of the paging information on a corresponding first type of initial BWP;
based on a coverage enhancement level of at least one of the first type of initial BWP, determining a first type of initial BWP corresponding to a predetermined enhanced coverage level to monitor the paging information.

32. An initial BWP processing apparatus, comprising:
a first processing module configured to determine configuration information for a first type of User Equipment (UE), wherein the configuration information is used to indicate that at least one type of initial Bandwidth Part (BWP) is configured for the first type of UE.

33. An initial BWP processing method, comprising:
a receiving module configured to receive configuration information, wherein the configuration information is used to indicate that at least one type of initial Bandwidth Part (BWP) is configured for a first type of UE.

34. A communication device, comprising:
a processor;
a memory storing instructions executable by the processor;
wherein the processor is configured to, when running the executable instructions, implement the initial BWP processing method according to any one of claims 1 to 26 or claims 27 to 31.

35. A computer storage medium, wherein the computer storage stores computer executable programs, when the executable programs are executed by a processor, the initial BWP processing method according to any one of claims 1 to 26 or claims 27 to 31 is implemented.
